# EUROPEAN PATENT APPLICATION

(11) **EP 4 832 178 A1**
(43) Date of publication of application: **28.10.2026**
(21) Application number: 24923127.5
(22) Date of filing: 16.04.2024
(51) Int. Cl.: H01M 10/6568, H01M 10/6556, H01M 50/244, H01M 50/249

(54) **BATTERY AND ELECTRICAL APPARATUS**

(30) Priority: 06.02.2024 CN 202410171807
(71) Applicant: Contemporary Amperex Technology Co., Limited, Ningde, Fujian 352100 (CN)
(72) Inventor: HU, Lijun, Ningde, Fujian 352100 (CN); SONG, Feiting, Ningde, Fujian 352100 (CN); HUANG, Xiaoteng, Ningde, Fujian 352100 (CN)
(74) Representative: Ziebig Hengelhaupt Intellectual Property Attorneys Patentanwaltskanzlei PartGmbB
(86) International application number: PCT/CN2024/088014
(87) International publication number: WO 2025/166902

(57) **Abstract**

A battery (100) and an electric apparatus are disclosed, pertaining to the field of battery technologies. The battery (100) includes a case assembly (1), a cell assembly (2), and a heat exchange assembly (3). The case assembly (1) includes a case (11). The cell assembly (2) is disposed in the case (11) and includes a plurality of battery cells (21). The heat exchange assembly (3) includes a heat exchanger (31), an adapter (32), and a connecting pipe (33), where the heat exchanger (31) is disposed outside the case (11) and defines a first flow passage (310), the adapter (32) is disposed inside the case (11) and defines a second flow passage (320), and the connecting pipe (33) penetrates the case (11) and connects the first flow passage (310) and the second flow passage (320).

## Description

### CROSS-REFERENCE TO RELATED APPLICATIONS

This application claims priority to Chinese Patent Application No. 202410171807.5, filed on February 6, 2024, which is incorporated herein by reference in its entirety.

### TECHNICAL FIELD

This application relates to the field of battery technologies, and in particular, to a battery and an electric apparatus.

### BACKGROUND

In recent years, new energy vehicles have experienced leapfrog development. In the field of electric vehicles, batteries, as the power source of electric vehicles, play an irreplaceable important role. However, the reliability and manufacturability of batteries need to be improved.

### SUMMARY

Embodiments of this application provide a battery and an electric apparatus, to improve reliability and manufacturability of the battery.

According to a first aspect, an embodiment of this application provides a battery including: a case assembly, a cell assembly, and a heat exchange assembly, where the case assembly includes a case, the cell assembly is disposed in the case and includes a plurality of battery cells, and the heat exchange assembly includes a heat exchanger, an adapter, and a connecting pipe, where the heat exchanger is disposed outside the case and defines a first flow passage, the adapter is disposed inside the case and defines a second flow passage, and the connecting pipe penetrates the case and connects the first flow passage and the second flow passage.

In the above technical solution, by arranging the heat exchanger outside the case, there is no need to consider the insulation issue between the heat exchanger and the battery cells inside the case. This simplifies the insulation design of the heat exchanger, reduces processing difficulty and production costs, and improves manufacturability of the battery. This also solves the problem of short circuits between the battery cells and the heat exchanger, improving the reliability of the battery. Moreover, by arranging the heat exchanger outside the case, the heat exchanger does not occupy space inside the case, so that the capacity of the battery is not reduced due to the installation of the heat exchanger, thereby effectively ensuring the capacity of the battery. Furthermore, by arranging the adapter inside the case and providing the connecting pipe that penetrates through the case to connect the adapter and the heat exchanger outside the case, the heat exchanger can introduce and discharge fluid through the adapter inside the case. Thus, by arranging the adapter inside the case, there is no need to provide an external liquid inlet/outlet path communicating with the heat exchanger outside the case, thereby eliminating the need to increase sealing difficulty to meet an extension requirement of the external liquid inlet/outlet path. This can reduce the sealing difficulty of the battery, simplify the structure and cost of the battery, and improve the sealing reliability.

In some embodiments, the adapter includes a flange portion and a joint portion, where the joint portion defines the second flow passage and is connected to the connecting pipe, the flange portion is connected to an outer periphery of the joint portion and abuts against an inner wall of the case, and the adapter is fixedly connected to the case through the flange portion.

In the above technical solution, by providing the adapter including the flange portion and the joint portion, with the flange portion located at the outer periphery of the joint portion, where the flange portion is fixedly connected to the case and the joint portion is connected to the connecting pipe, the connection position of the adapter and the case can thus be located in an outer peripheral region of the connection position of the adapter and the connecting pipe. On one hand, the connection position of the adapter and the case does not interfere with the connection position of the adapter and the connecting pipe, thereby facilitating the installation and fixation of the adapter to the case and the connection of the adapter to the connecting pipe. On the other hand, connecting the adapter and the case at the outer periphery of the connection position of the adapter and the connecting pipe helps utilize the connection between the adapter and the case to improve the connection reliability and stability between the adapter and the connecting pipe.

In some embodiments, the flange portion includes a flange plate and an insert provided on the flange plate, and the flange portion is connected to the case through a connecting member running through the insert.

In the above technical solution, by providing the insert on the flange plate and utilizing the insert running through the connecting member to realize the connection between the flange portion and the case, the material requirement for the flange plate can be lowered. For example, the flange plate may be made of plastic or metal, thereby improving the design flexibility.

In some embodiments, a first sealing member is sealingly fitted between the flange portion and the case, and the first sealing member is arranged around a fitting surface between the joint portion and the connecting pipe.

In the above technical solution, by providing the first sealing member between the flange portion and the case and arranging the first sealing member around the fitting surface between the joint portion and the connecting pipe, the entire circumferential region where the connecting pipe and the joint portion are connected can be sealed by the first sealing member. This can reduce the risk of heat exchange fluid overflowing from the fitting position of the connecting pipe leaking from the fitting position between the adapter and the case into the case, thereby improving the reliability of the battery. Moreover, the arrangement position of the first sealing member is clear, facilitating easy assembly of the first sealing member, thereby reducing the assembly difficulty and design difficulty.

In some embodiments, the flange portion has a first annular groove, and the first sealing member is a first sealing ring and embedded in the first annular groove.

In the above technical solution, the first sealing member has a simple structure and is easy to process. By embedding the first sealing member in the first annular groove, the installation stability of the first sealing member can be improved, so that the first sealing member can be reliably sealingly fitted between the flange portion and the case and surround the fitting surface between the joint portion and the connecting pipe. This further reduces the risk of heat exchange fluid overflowing from the fitting position of the connecting pipe leaking from the fitting position between the adapter and the case into the case, further improving the reliability of the battery. In addition, the flange portion is easily machined to be have a larger thickness than the case, thereby facilitating increase of the groove depth of the first annular groove. This improves the fitting stability between the first sealing member and the first annular groove, and further improves the installation stability of the first sealing member, thereby further improving the sealing effect of the first sealing member.

In some embodiments, the connecting pipe is inserted into the joint portion.

In the above technical solution, inserting the connecting pipe into the joint portion can realize direct sleeving connection between the connecting pipe and the joint portion, thereby eliminating the need for other connecting members, and improving the compactness of fitting. This also facilitates the assembly connection between the connecting pipe and the adapter, reducing the structural complexity of the joint portion, and facilitating the processing of the adapter.

In some embodiments, the joint portion includes an insertion section and a pipe connection section, where the joint portion is in a form of an elbow and is bent at a joint between the insertion section and the pipe connection section, the connecting pipe is inserted into the insertion section, and the pipe connection section is sleeved with an adapter pipe.

In the above technical solution, since the joint portion includes the pipe connection section that can be sleeved with the adapter pipe, the joint portion can be conveniently connected to a heat exchange liquid circulation system, simplifying the structure and improving the assembly efficiency. Moreover, since the joint portion is in the form of an elbow and is bent at the joint between the insertion section and the pipe connection section, the direction for connecting the pipe connection section and the adapter pipe can intersect with the direction for connecting the insertion section and the connecting pipe, reducing the height space required for connecting the adapter and the adapter pipe, thereby reducing the space occupation at the adapter.

In some embodiments, the heat exchange assembly further includes: a second sealing member, where the second sealing member is sealingly fitted between the adapter and the connecting pipe.

In the above technical solution, by providing the second sealing member between the adapter and the connecting pipe, the risk of heat exchange fluid overflowing from the fitting position between the adapter and the connecting pipe can be reduced, thereby improving the reliability of the battery. Moreover, the arrangement position of the second sealing member is clear, facilitating easy assembly of the second sealing member, thereby reducing the assembly difficulty and design difficulty.

In some embodiments, the connecting pipe is inserted into the adapter, and the second sealing member is arranged around the connecting pipe.

In the above technical solution, the connection between the connecting pipe and the adapter is convenient, the installation stability of the second sealing member can be improved, and the entire circumferential region of the connecting pipe can be sealed by the second sealing member, thereby further improving the sealing effect and reducing the risk of heat exchange fluid overflowing from the fitting position between the adapter and the connecting pipe.

In some embodiments, the adapter has a second annular groove, and the second sealing member is a second sealing ring and embedded in the second annular groove.

In the above technical solution, the second sealing member has a simple structure and is easy to process. By embedding the second sealing member in the second annular groove, the installation stability of the second sealing member can be improved, so that the second sealing member can be reliably sealingly fitted between the adapter and the connecting pipe. This further reduces the risk of heat exchange fluid overflowing from the fitting position between the adapter and the connecting pipe, and further improves the reliability of the battery. In addition, since the connecting pipe needs to penetrate through the case, the adapter is easily machined to have a greater wall thickness than the connecting pipe, thereby facilitating increase of the groove depth of the second annular groove. This improves the fitting stability between the second sealing member and the second annular groove, and further improves the installation stability of the second sealing member, thereby further improving the sealing effect of the second sealing member.

In some embodiments, a plurality of second sealing members are provided and spaced apart along an axial direction of the connecting pipe.

In the above technical solution, by utilizing the axial space of the connecting pipe to cleverly arrange a plurality of second sealing members, multi-stage sealing and blocking can be achieved, thereby improving the sealing effect.

In some embodiments, the connecting pipe is in insertion fit with the heat exchanger.

In the above technical solution, the insertion fit between the connecting pipe and the heat exchanger allows direct insertion between the connecting pipe and the heat exchanger, thereby eliminating the need for other connecting members, and improving the compactness of fitting. This also facilitates the assembly connection between the connecting pipe and the heat exchanger, reducing the structural complexity of the heat exchanger, and facilitating the processing of the heat exchanger.

In some embodiments, a connection hole is provided on a side of the heat exchanger facing the case, an end portion of the connecting pipe located outside the case has an extension section, and the extension section is inserted into the connection hole.

In the above technical solution, it is only necessary to machine the connection hole on the heat exchanger, thereby simplifying processing of the heat exchanger. Moreover, since the connection hole is provided on the side of the heat exchanger facing the case, this facilitates insertion of the connecting pipe penetrating through the case, thereby facilitating insertion between the connecting pipe and the heat exchanger.

In some embodiments, the end portion of the connecting pipe located outside the case further has a stepped section, and the stepped section abuts against a surface of the heat exchanger on the side facing the case.

In the above technical solution, by providing the stepped section at the end portion of the connecting pipe to abut against the outer surface of the heat exchanger, the depth of insertion of the extension section into the connection hole can be limited to prevent the extension section from extending too far into the connection hole and blocking the flow passage, so that the connecting pipe and the heat exchanger can be in reliable communication. Moreover, by utilizing the abutment between the stepped section and the heat exchanger, the fitting stability and sealing between the connecting pipe and the heat exchanger can also be improved.

In some embodiments, the connecting pipe includes a pipe body, where taking a cross section of the connecting pipe as a projection plane, a projection of the stepped section extends beyond a projection contour range of the pipe body, and a projection of the extension section is located within the projection contour range of the pipe body.

In the above technical solution, the stepped section has a larger area, allowing for more stable abutment against the heat exchanger, further improving the fitting stability and sealing between the connecting pipe and the heat exchanger. This also helps reduce the aperture of the connection hole, improving the structural strength of the heat exchanger at the connection hole.

In some embodiments, the connecting pipe is welded to the heat exchanger, and the heat exchanger is adhesively bonded or welded to the case.

In the above technical solution, since the connecting pipe is welded to the heat exchanger and the heat exchanger is adhesively bonded or welded to the case, reliable connection between the connecting pipe and the heat exchanger and reliable connection between the heat exchanger and the case can be implemented, thereby improving the operational stability and reliability of the heat exchange assembly.

In some embodiments, the case assembly further includes: a bottom guard plate, where the bottom guard plate is disposed below a bottom wall of the case, and the heat exchanger is disposed between the bottom wall and the bottom guard plate.

In the above technical solution, by arranging the heat exchanger below the bottom wall of the case, the heat exchanger can exchange heat with the cell assembly over a relatively large range, improving the temperature regulation effect and efficiency for the cell assembly. Moreover, by providing the bottom guard plate below the heat exchanger, the heat exchanger can be more reliably protected, reducing the risk of damage to the heat exchanger caused by collision or impact, and improving the operational reliability of the heat exchanger.

In some embodiments, the case assembly further includes: a sealing member, where the sealing member is sealingly fitted between the bottom wall and the bottom guard plate and includes an outer peripheral portion arranged around the heat exchanger, and the connecting pipe corresponds to a region enclosed by the outer peripheral portion and penetrates through the bottom wall.

In the above technical solution, by arranging the position where the connecting pipe penetrates through the bottom wall within the region surrounded by the outer peripheral portion, when the outer peripheral portion is sealingly fitted between the bottom wall and the bottom guard plate, mud, water, particles, and the like outside the case assembly are not easy to pass through the outer peripheral portion to enter between the bottom wall and the bottom guard plate and flow to the position where the connecting pipe penetrates through the bottom wall to enter the case, thereby improving the reliability of the battery. Moreover, since the outer peripheral portion surrounds the heat exchanger, mud, water, particles, and the like outside the case assembly are not easy to pass through the outer peripheral portion to enter between the bottom wall and the bottom guard plate and contaminate or corrode the heat exchanger between the bottom wall and the bottom guard plate, thereby improving the reliability and service life of the heat exchanger.

In some embodiments, an adhesive layer is provided between the heat exchanger and each of the bottom wall and the bottom guard plate.

In the above technical solution, on the one hand, the stability of heat transfer between the heat exchanger and the bottom wall can be improved, and on the other hand, the protection of two side surfaces of the heat exchanger can be improved, thereby protecting the heat exchanger.

In some embodiments, the heat exchanger includes at least one heat exchange tube extending in a bent manner, and the case assembly further includes: a foaming member, where the foaming member is disposed between the bottom wall and the bottom guard plate and includes a first foaming portion arranged around the heat exchanger, and a second foaming portion disposed between adjacent tube sections of the same heat exchange tube or between adjacent heat exchange tubes.

In the above technical solution, the foaming member can be utilized to fill the space between the bottom wall and the bottom guard plate excluding the heat exchanger, that is, complementarily arranged with the heat exchanger, so that the foaming member can support the bottom wall and the bottom guard plate. When the guard plate is subjected to collision or impact, the foaming member can buffer the impact force, reducing the force of the bottom guard plate impacting the heat exchanger or the case, thereby protecting the heat exchanger and the cell assembly inside the case. Moreover, the foaming member can also fill gaps between the heat exchange tubes, to support and limit the positions of the heat exchange tubes, so that the heat exchange tubes can stably stay in the arrangement positions to provide stable temperature regulation.

In some embodiments, the foaming member is connected to the bottom guard plate, and an upper surface of the heat exchanger is higher than an upper surface of the foaming member.

In the above technical solution, the molding difficulty of the foaming member can be reduced, and the thickness uniformity of the foaming member can be favorably controlled, so that the arrangement of the foaming member does not interfere with the heat transfer cooperation between the heat exchanger and the bottom wall. This improves the stability and reliability of heat transfer between the heat exchanger and the bottom wall, and improves the temperature regulation effect for the cell assembly, thereby improving the operational reliability of the battery.

In some embodiments, the first flow passage has a first port and a second port, and the heat exchanger has a connection hole connected to the connecting pipe, where the connection hole is provided in two, one being arranged corresponding to the first port and the other being arranged corresponding to the second port, and the adapter and the connecting pipe are each provided in two, each connection hole being disposed corresponding to one connecting pipe and one adapter.

In the above technical solution, there is no need to provide two channels with opposite flow directions in each connecting pipe, so the pipe diameter of the connecting pipe can be reduced, thereby reducing the aperture of the connection hole, reducing the sealing difficulty at the fitting position between the connection hole and the connecting pipe, and improving the sealing reliability. Moreover, since the two ports of the first flow passage are respectively connected to the two adapters through the two connecting pipes, the two ports of the first flow passage do not need to be arranged together, the two connecting pipes do not need to be arranged together, and the two adapters do not need to be arranged together. This allows selection of relative positions of the two adapters according to design requirements, making the design more flexible.

In some embodiments, the first flow passage includes a plurality of heat exchange flow passages arranged in parallel, the plurality of heat exchange flow passages have one end converged to the first port, and the plurality of heat exchange flow passages have the other end converged to the second port.

In the above technical solution, since the first flow passage includes a plurality of heat exchange flow passages arranged in parallel, when the total length of the first flow passage is fixed, the length of each heat exchange flow passage can be shorter, thereby improving the overall heat exchange efficiency of the first flow passage, and improving the temperature regulation effect of the heat exchanger on the cell assembly. Moreover, by correspondingly converging two ends of each of the plurality of heat exchange flow passages to the two connecting pipes, the number of connecting pipes and adapters can be reduced, reducing material costs. Also, the number of connection holes provided in the case can be reduced, reducing the sealing surfaces and improving the sealing performance.

In some embodiments, the heat exchanger includes at least one first heat exchange flow passage, and the first heat exchange flow passage includes a first heat exchange section, a second heat exchange section, and a third heat exchange section, where the second heat exchange section is bent to form a first U-shaped region, the first heat exchange section is bent and disposed in the first U-shaped region and is connected in a bent manner to the second heat exchange section through the third heat exchange section, and the second heat exchange section is located at an outermost side in a circumferential direction of the first heat exchange flow passage.

In the above technical solution, the second heat exchange section is bent to form the first U-shaped region, the first heat exchange section is bent and disposed in the first U-shaped region, and the second heat exchange section is disposed at the outermost side in the circumferential direction of the first heat exchange flow passage. In this way, when the heat exchanger of this embodiment is used to exchange heat with the cell assembly, at least part of the first U-shaped region formed by the peripheral second heat exchange section can be arranged opposite at least part of the battery cells on the outer periphery of the cell assembly, so that the second heat exchange section can exchange heat with at least part of the battery cells on the outer periphery of the cell assembly. Moreover, the first heat exchange section in the first U-shaped region can be arranged opposite the internal battery cells, so that the heat exchanger can compensate for the internal-external temperature difference caused by heat exchange between the peripheral battery cells and the environment, making the heat exchange effects of the battery cells on the periphery of the cell assembly and the battery cells inside the cell assembly tend to be consistent. This helps mitigate the temperature difference of the cell assembly in different environments, and improve the temperature uniformity of the battery, thereby improving the service life of the battery to a certain extent.

In some embodiments, the cell assembly includes a plurality of battery units arranged along a first direction, each battery unit includes a plurality of battery cells sequentially stacked along a second direction, and at least part of the second heat exchange section correspondingly exchanges heat with the plurality of battery cells located at an outermost periphery of the cell assembly in a circumferential direction.

In the above technical solution, by coordinating the arrangement of the battery cells and the extending arrangement of the first heat exchange flow passage, and arranging at least part of the second heat exchange section to correspondingly exchange heat with the peripheral battery cell group, the heat exchange efficiency of the peripheral battery cell group can be improved. This can further balance the temperature difference caused by the greater heat dissipation of the peripheral battery cells in the battery assembly compared to the inner battery cells in the battery assembly.

In some embodiments, the heat exchanger further includes at least one second heat exchange flow passage, and the second heat exchange flow passage and the first heat exchange flow passage are bent in a same plane, and the second heat exchange flow passage is bent and disposed in the first U-shaped region of the first heat exchange flow passage.

In the above technical solution, by providing at least one first heat exchange flow passage and at least one second heat exchange flow passage, and coordinating their relative positional relationship, the arrangement of the heat exchange flow passages can be designed according to the cooling requirement of the battery, thereby further optimizing the temperature regulation effect on the cell assembly and improving the temperature uniformity of the battery.

In some embodiments, at least one second heat exchange flow passage is bent to form a second U-shaped region, and at least part of the first heat exchange section is disposed in the second U-shaped region of the second heat exchange flow passage.

In the above technical solution, by bending at least one second heat exchange flow passage to form the second U-shaped region and arranging at least part of the first heat exchange section in the second U-shaped region of the second heat exchange flow passage, coordination between the first heat exchange flow passage and the second heat exchange flow passage is facilitated, thereby further improving the temperature uniformity of the battery.

In some embodiments, the heat exchanger includes at least one heat exchange tube extending in a bent manner, where one heat exchange flow passage is defined in each heat exchange tube, and the heat exchange tube is a flat tube structure.

In the above technical solution, the heat exchanger with a flat tube structure occupies small space, improving the capacity of the battery and reducing the weight, volume, and cost of the battery.

In some embodiments, the heat exchanger includes a main body portion and a connection portion, where the main body portion includes a plurality of first tubes spaced apart along the first direction and extending along the second direction, the connection portion is connected to an end of the main body portion in the second direction, the heat exchanger has a connection hole connected to the connecting pipe, and the connection hole is provided on the connection portion.

In the above technical solution, by providing the connection hole on the connection portion located at one end of the main body portion, connections for liquid inlet/outlet can be concentrated at the end portion of the heat exchanger, thereby facilitating connection of the adapter to the liquid inlet/outlet path of the temperature regulation circulation system. Moreover, since the main body portion includes a plurality of first tubes, the plurality of first tubes are spaced apart along the first direction, and each first tube extends along the second direction, the main body portion has a simple structure and can cover a larger range, improving the temperature regulation effect.

In some embodiments, the connection portion includes third tubes located on two sides of the connection hole in the first direction, and at least two of the third tubes on two sides of at least one of the connection hole extend in directions away from each other in a direction from the connection hole to the main body portion.

In the above technical solution, the flat tubes are dispersed at the connection portion, helping improve the temperature uniformity of temperature regulation and improving the operation reliability and stability of the battery.

In some embodiments, the case is an integrally stamped part and includes a bottom wall and a surrounding wall, where an accommodation space is formed between the bottom wall and the surrounding wall, and the battery cells are installed in the accommodation space.

In the above technical solution, since the bottom wall and the surrounding wall of the case are integrally stamped, the sealing effect can be ensured with no need to consider sealing at the joint between the bottom wall and the surrounding wall. This prevents mud and water from infiltrating into the case from the joint between the bottom wall and the surrounding wall and affecting the cell assembly inside the case, improving the reliability of the battery. Moreover, the integrally stamped case does not need splicing, thereby improving the production efficiency.

In some embodiments, a thermal management system of the battery further includes a temperature regulation member disposed inside the case, where the temperature regulation member is disposed on at least one of a bottom, a top, and a side of the battery cells.

In the above technical solution, not only the heat exchanger is provided outside the case, but also the temperature regulation member is provided inside the case, which can improve the regulation effect of the battery.

According to a second aspect, an embodiment of this application further provides an electric apparatus including the battery according to any of the above solutions.

In the above technical solution, since the performance of the battery is improved, the operational power performance of the electric apparatus can be improved.

### DESCRIPTION OF THE DRAWINGS

To describe the technical solutions in the embodiments of this application more clearly, the following briefly describes the accompanying drawings for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a partial structure of a battery according to some embodiments of this application;
FIG. 3 is an exploded view of a partial structure of a battery according to some embodiments of this application;
FIG. 4 is an enlarged view of part A circled in FIG. 3;
FIG. 5 is an exploded view of a heat exchange assembly according to some embodiments of this application;
FIG. 6 is an enlarged view of part B circled in FIG. 5;
FIG. 7 is an assembly view of a partial structure of a battery according to some embodiments of this application;
FIG. 8 is an orthogonal projection view of a partial structure of the battery shown in FIG. 7;
FIG. 9 is a cross-sectional view taken along line C-C in FIG. 8;
FIG. 10 is an enlarged view of part D circled in FIG. 9;
FIG. 11 is a schematic structural diagram of an adapter according to some embodiments of this application;
FIG. 12 is a schematic diagram of an orthogonal projection of the adapter shown in FIG. 11;
FIG. 13 is a cross-sectional view of the adapter shown in FIG. 12;
FIG. 14 is a bottom view of the adapter shown in FIG. 12;
FIG. 15 is a side view of the adapter shown in FIG. 11;
FIG. 16 is a cross-sectional view of the adapter shown in FIG. 15;
FIG. 17 is a partial cross-sectional view of a heat exchange assembly fitted with a case according to some embodiments of this application;
FIG. 18 is an exploded view of a heat exchange assembly and a case assembly according to some embodiments of this application;
FIG. 19 is a bottom view of the assembled heat exchange assembly and case shown in FIG. 18;
FIG. 20 is an assembly view of the heat exchanger and the case shown in FIG. 18;
FIG. 21 is a schematic diagram of the heat exchanger shown in FIG. 20;
FIG. 22 is an assembly view of partial components of a battery according to some embodiments of this application;
FIG. 23 is a cross-sectional view of partial components of a battery according to some embodiments of this application;
FIG. 24 is an exploded view of partial components of a battery according to some embodiments of this application;
FIG. 25 is a schematic diagram of a heat exchanger according to some embodiments of this application;
FIG. 26 is a schematic diagram of a heat exchanger according to some embodiments of this application; and
FIG. 27 is a schematic diagram of a heat exchanger according to some other embodiments of this application.

Reference signs: vehicle 1000; battery 100; controller 200; motor 300; case assembly 1; first direction X; second direction Y; third direction Z; case 11; accommodation space 110; first space 115; second space 116; bottom wall 111; first hole 1111; second hole 1112; surrounding wall 112; first wall 113; second wall 114; case cover 12; bottom guard plate 13; first plate 131; second plate 132; sealing member 14; outer peripheral portion 141; adhesive layer 15; foaming member 16; first foaming portion 161; second foaming portion 162; expansion beam 17; first expansion beam 171; second expansion beam 172; cell assembly 2; battery unit 20; battery cell 21; heat exchange assembly 3; heat exchanger 31; first flow passage 310; heat exchange flow passage 3103; first heat exchange section 31031; second heat exchange section 31032; first heat exchange flow passage 3104; first U-shaped region Z1; first segment R1; second segment R2; third segment R3; fourth segment R4; second heat exchange flow passage 3105; second U-shaped region Z2; connection hole 311; first port 3101; second port 3102; main body portion 31a; connection portion 31b; first tube 312; second tube 313; third tube 314; adapter 32; second flow passage 320; flange portion 321; flange plate 3211; insert 3212; first annular groove 3213; joint portion 322; insertion section 3221; pipe connection section 3222; second annular groove 3223; connecting pipe 33; extension section 331; shoulder section 332; pipe body 333; first sealing member 34; second sealing member 35; connecting member 36; adapter pipe 4; temperature regulation member 5; first temperature regulation member 51; second temperature regulation member 52; and third temperature regulation member 53.

### DETAILED DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to indicate a particular order or relative importance.

The term "embodiment" in this application means that specific features, structures, or characteristics described with reference to the embodiment may be included in at least one embodiment of this application. The phrase "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same members. For brevity, in different embodiments, detailed descriptions of the same members are not repeated. It should be understood that as shown in the accompanying drawings, dimensions such as thickness, length, and width of various components and dimensions such as thickness, length, and width of integrated apparatuses in the embodiments of this application are merely for illustrative purposes and should not constitute any limitations on this application.

The term "plurality" in this application refers to two or more (including two).

In this application, a battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of this application. The battery cell may be cylindrical, flat, rectangular, or of other shapes, which is also not limited in the embodiments of this application. Battery cells are generally divided into three types according to packaging methods: cylindrical battery cells, prismatic battery cells, and pouch battery cells, which is also not limited in the embodiments of this application.

The battery mentioned in the embodiments of this application refers to a single physical module including one or more battery cells to provide higher voltage and capacity. The battery typically includes a case assembly for packaging one or more battery cells or one or more battery modules. The battery module typically includes a plurality of battery cells. The case assembly can prevent liquid or other foreign matters from affecting charging or discharging of the battery cells.

A battery cell includes a case, an electrode assembly, and an electrolyte, where the case is configured to accommodate the electrode assembly and the electrolyte, and one or more electrode assemblies are provided in the case. The electrode assembly is composed of a positive electrode plate, a negative electrode plate, and a separator. The electrode assembly may be a wound structure, a stacked structure, or the like. The battery cell mainly functions relying on migration of metal ions between the positive electrode plate and the negative electrode plate.

The positive electrode plate typically may include a positive electrode current collector and a positive electrode active substance layer. The positive electrode active substance layer is directly or indirectly applied on the positive electrode current collector. The part of the positive electrode current collector uncoated with the positive electrode active substance layer protrudes out of the part of the positive electrode current collector coated with the positive electrode active substance layer, and the part of the positive electrode current collector uncoated with the positive electrode active substance layer serves as a positive electrode tab. Taking a lithium-ion battery as an example, the material of the positive current collector may be aluminum, and the material of the positive active material layer may be lithium cobalt oxide, lithium iron phosphate, ternary lithium, lithium manganate, or the like.

The negative electrode plate typically may include a negative electrode current collector and a negative electrode active substance layer. The negative electrode active substance layer is directly or indirectly applied on the negative electrode current collector. The part of the negative electrode current collector uncoated with the negative electrode active substance layer protrudes out of the part of the negative electrode current collector coated with the negative electrode active substance layer, and the negative electrode current collector uncoated with the negative electrode active substance layer serves as a negative electrode tab. The material of the negative electrode current collector may be copper, and the material of the negative electrode active substance layer may be carbon, silicon, or the like.

To allow a large current to pass through without fusing, there are a plurality of positive electrode tabs stacked together to form a positive electrode tab portion, and there are a plurality of negative electrode tabs stacked together to form a negative electrode tab portion. A terminal is provided on the case, the positive electrode tab portion is electrically connected to a positive electrode terminal, and the negative electrode tab portion is electrically connected to a negative electrode terminal. The tab portion may be directly connected to the terminal or indirectly connected to the terminal through an adapter piece.

The material of the separator is not limited, for example, it may be polypropylene, polyethylene, or the like.

In a battery in the related art, a brazed cold plate is provided inside the case, and the brazed cold plate is located below the battery cells. During assembly, the issue of insulation between the brazed cold plate and the battery cells needs to be considered, resulting in high manufacturing difficulty. Moreover, if local insulation fails, the reliability of the battery is affected. The brazed cold plate also occupies space inside the case, affecting the capacity of the battery.

To this end, an embodiment of this application proposes a battery, where a heat exchanger is disposed outside a case, with no need to consider issues such as insulation and anti-corrosion between the heat exchanger and the battery cells inside the case, thereby simplifying the insulation and anti-corrosion design of the heat exchanger, reducing the processing difficulty and production costs, solving the problem of short circuits between the battery cells and the heat exchanger, and improving the reliability of the battery. Moreover, by arranging the heat exchanger outside the case, the heat exchanger does not occupy space inside the case, so that the capacity of the battery is not reduced due to the installation of the heat exchanger, thereby effectively ensuring the capacity of the battery. Furthermore, by arranging the adapter inside the case and providing the connecting pipe that penetrates through the case to connect the adapter and the heat exchanger outside the case, the heat exchanger can introduce and discharge fluid through the adapter inside the case. In this way, by arranging the adapter inside the case, there is no need to provide an external liquid inlet/outlet path communicating with the heat exchanger outside the case. This eliminates the need to increase sealing difficulty to meet the extension requirement of the external liquid inlet/outlet path, thereby reducing the sealing difficulty of the battery, simplifying the structure and cost of the battery, and improving the sealing reliability.

An embodiment of this application provides an electric apparatus using a battery as a power source. The electric apparatus may be, but is not limited to, a mobile phone, a tablet, a laptop, an electric toy, an electric tool, a battery car, an electric vehicle, a ship, a spacecraft, or the like. The electric toy may include a fixed or mobile electric toy, such as a game console, an electric toy car, an electric toy ship, or an electric toy airplane. The spacecraft may include an airplane, a rocket, a space shuttle, a spaceship, and the like.

For ease of description, the electric apparatus of an embodiment of this application being a vehicle is used as an example for description of the following embodiments.

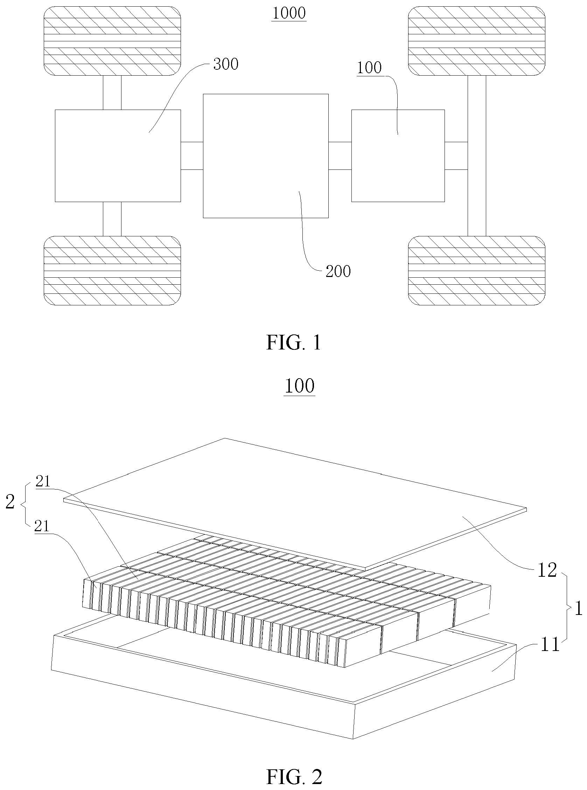

Referring to FIG. 1, FIG. 1 is a schematic structural diagram of a vehicle 1000 according to some embodiments of this application. The vehicle 1000 may be a fuel vehicle, a gas vehicle, or a new energy vehicle, and the new energy vehicle may be a battery electric vehicle, a hybrid vehicle, an extended-range vehicle, or the like. A battery 100 is provided inside the vehicle 1000, and the battery 100 may be disposed at the bottom of the vehicle 1000, the front of the vehicle 1000, or the rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 may be used not only as an operational power source for the vehicle 1000 but also as a driving power source for the vehicle 1000, replacing or partially replacing fuel or natural gas to provide traction for the vehicle 1000.

Referring to FIG. 2, FIG. 2 is an exploded view of a partial structure of a battery 100 according to some embodiments of this application. The battery 100 includes a case assembly 1 and a cell assembly 2. The case assembly 1 includes a case 11, and the cell assembly 2 is disposed in the case 11. The cell assembly 2 includes a plurality of battery cells 21. The plurality of battery cells 21 may be connected in series, parallel, or series-parallel, where being connected in series-parallel means a combination of series and parallel connections of the plurality of battery cells 21. The plurality of battery cells 21 may be directly connected in series, parallel, or series-parallel, and then an entirety formed by the plurality of battery cells 21 is accommodated in the case assembly 1. Certainly, the plurality of battery cells 21 may be connected in series, parallel, or series-parallel first to form a battery module, and then a plurality of battery modules are connected in series, parallel, or series-parallel to form an entirety which is accommodated in the case assembly 1.

The battery 100 may further include other structures. For example, the battery 100 may further include a busbar component, where the busbar component is configured connect the plurality of battery cells 21 to implement electrical connection between the plurality of battery cells 21. Each battery cell 21 may be a secondary battery or a primary battery; or may be a lithium-sulfur battery, a sodium-ion battery, or a magnesium-ion battery, but is not limited thereto. The battery cell 21 may be cylindrical, flat, rectangular, or of other shapes.

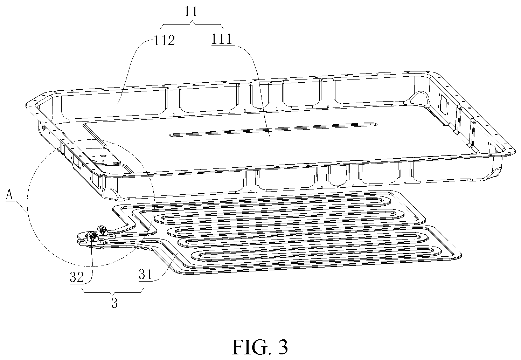

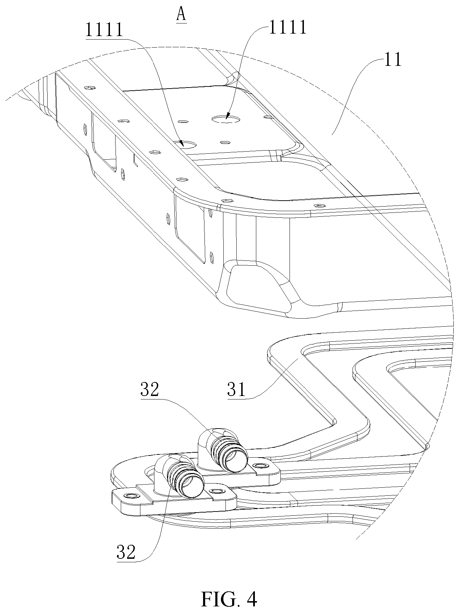

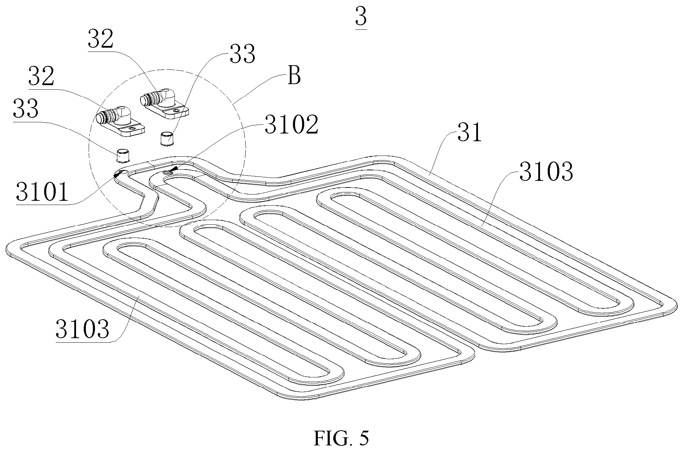

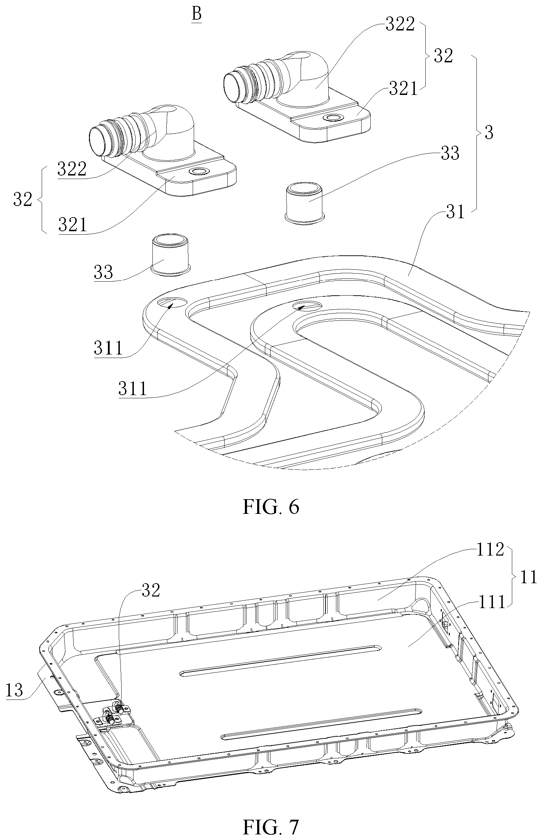

Referring to FIG. 3 to FIG. 7, FIG. 3 is an exploded view of a partial structure of a battery 100 according to some embodiments of this application, FIG. 4 is an enlarged view of part A circled in FIG. 3, FIG. 5 is an exploded view of a heat exchange assembly 3 according to some embodiments of this application, FIG. 6 is an enlarged view of part B circled in FIG. 5, and FIG. 7 is an assembly view of a partial structure of a battery 100 according to some embodiments of this application. The battery 100 further includes a heat exchange assembly 3. The heat exchange assembly 3 includes a heat exchanger 31, an adapter 32, and a connecting pipe 33, where the heat exchanger 31 is disposed outside the case 11, and the adapter 32 is disposed inside the case 11.

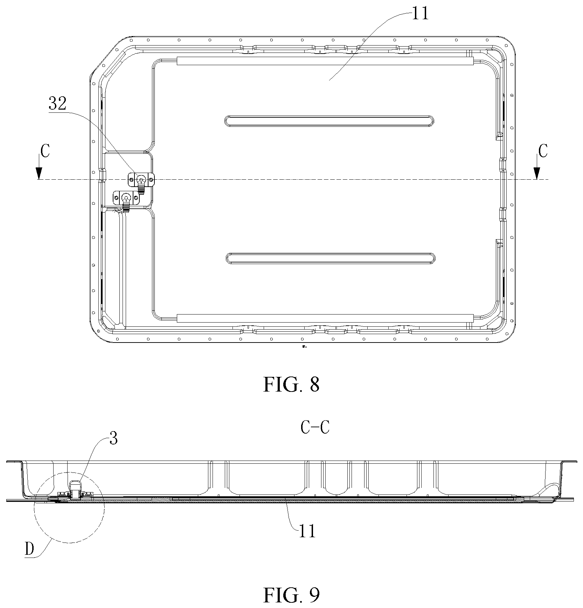

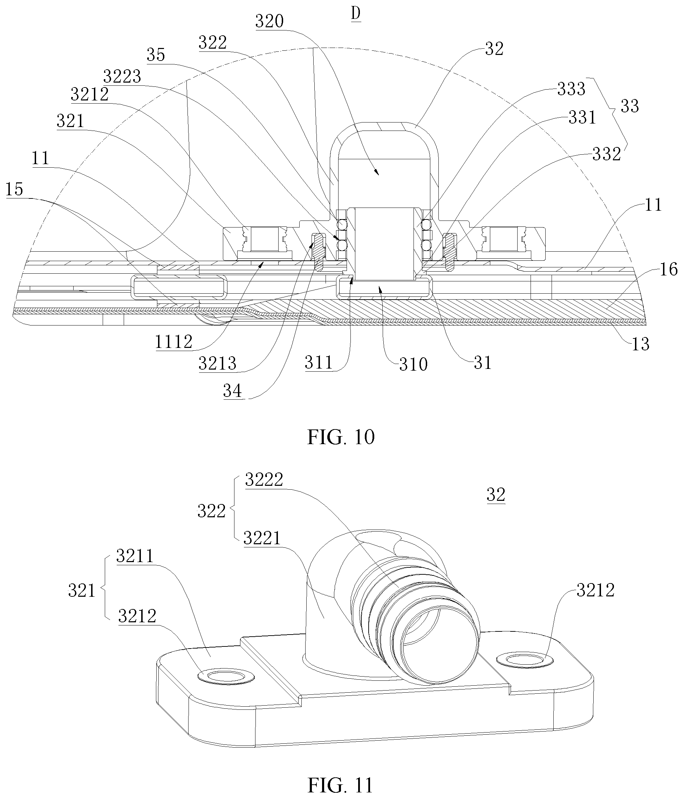

Referring to FIG. 8 to FIG. 10, FIG. 8 is an orthogonal projection view of a partial structure of the battery shown in FIG. 7; FIG. 9 is a cross-sectional view taken along line C-C in FIG. 8; and FIG. 10 is an enlarged view of part D circled in FIG. 9. The heat exchanger 31 outside the case 11 defines a first flow passage 310, the adapter 32 inside the case 11 defines a second flow passage 320, and the connecting pipe 33 penetrates through the case 11 and connects the first flow passage 310 and the second flow passage 320. In this way, by providing the connecting pipe 33 penetrating through the case 11, the adapter 32 disposed inside the case 11 can communicate with the heat exchanger 31 disposed outside the case 11, making it possible to arrange the adapter 32 inside the case 11 and arrange the heat exchanger 31 outside the case 11.

For example, fluid to be heat-exchanged can be injected into the first flow passage 310 of the heat exchanger 31 through the second flow passage 320 of the adapter 32 and the connecting pipe 33, the fluid flowing through the first flow passage 310 exchanges heat with the battery cells 21 through the heat exchanger 31 and the case 11 to realize temperature regulation of the battery cells 21, and the heat-exchanged fluid flows out from the first flow passage 310 and is discharged from the second flow passage 320 of the adapter 32 through the connecting pipe 33. The fluid to be heat-exchanged may be in liquid form, in gas form, or the like. For simplicity of description, the following description takes the fluid flowing through the heat exchange assembly 3 being heat exchange liquid as an example.

The number of adapters 32 is not limited and may be one or more. For example, when there is one adapter 32, the second flow passage 320 in the adapter 32 may include two independent flow sub-passages, and there is also one connecting pipe 33 which has two independent sub-channels inside, where one flow sub-passage corresponds to one sub-channel and is configured to inject heat exchange liquid into an inlet of the first flow passage 310, and the other flow sub-passage corresponds to the other sub-channel and is configured to receive heat exchange liquid discharged from an outlet of the first flow passage 310.

For example, when there are two adapters 32, there are also two connecting pipes 33, one adapter 32 injects heat exchange liquid into the inlet of the first flow passage 310 through one connecting pipe 33, and the other adapter 32 receives heat exchange liquid discharged from the outlet of the first flow passage 310 through the other connecting pipe 33. Certainly, in other embodiments of this application, the numbers of adapters 32 and connecting pipes 33 may be different, for example, one adapter 32 may communicate with a plurality of connecting pipes 33, or a plurality of adapters 32 may communicate with one connecting pipe 33, or the like. When the numbers of adapters 32 and connecting pipes 33 are the same and they are arranged in one-to-one correspondence, the structure and connection can be simplified. Therefore, for simplicity of description, the following mainly uses this solution as an example for description.

For example, the number of adapters 32 may be more than two, which, for example, may be applicable to a case that the first flow passage 310 includes a plurality of parallel branches, with each parallel branch corresponding to one or two adapters 32. Certainly, this application is not limited thereto. In other embodiments of this application, when the first flow passage 310 includes a plurality of parallel branches, inlets of the plurality of parallel branches may share a same adapter 32, outlets of the plurality of parallel branches may also share a same adapter 32; or inlets of the plurality of parallel branches may share a same sub-passage in a same adapter 32, and outlets of the plurality of parallel branches may simultaneously share another sub-passage in that adapter 32.

In this way, by arranging the heat exchanger 31 outside the case 11, there is no need to consider issues such as insulation and anti-corrosion between the heat exchanger 31 and the battery cells 11 inside the case 11, thereby simplifying the insulation and anti-corrosion design of the heat exchanger 31, reducing the processing difficulty and production costs, solving the problem of short circuits between the battery cells 21 and the heat exchanger 31, and improving the reliability of the battery 100. Moreover, by arranging the heat exchanger 31 outside the case 11, the heat exchanger 31 does not occupy space inside the case 11, so that the capacity of the battery 100 is not reduced due to the installation of the heat exchanger 31, thereby effectively ensuring the capacity of the battery 100.

Furthermore, by arranging the adapter 32 inside the case 11 and providing the connecting pipe 33 that penetrates through the case 11 to connect the adapter 32 and the heat exchanger 31 outside the case 11, the heat exchanger 31 can introduce and discharge fluid through the adapter 32 inside the case 11. In this way, there is no need to provide an external liquid inlet/outlet path communicating with the heat exchanger 31 outside the case 11. This eliminates the need to increase sealing difficulty to meet the extension requirement of the external liquid inlet/outlet path, thereby reducing the sealing difficulty of the battery 100, simplifying the structure and cost of the battery 100, and improving the sealing reliability.

Referring to FIG. 10 and FIG. 11, FIG. 11 is a schematic structural diagram of an adapter 32 according to some embodiments of this application. In some embodiments of this application, the adapter 32 includes a flange portion 321 and a joint portion 322, where the joint portion 322 defines the second flow passage 320 and the joint portion 322 is connected to the connecting pipe 33, the flange portion 321 is connected to an outer periphery of the joint portion 322 and the flange portion 321 abuts against an inner wall of the case 11, and the adapter 32 is fixedly connected to the case 11 through the flange portion 321.

In the above technical solution, by providing the adapter 32 including the flange portion 321 and the joint portion 322, with the flange portion 321 located at the outer periphery of the joint portion 322, where the flange portion 321 is fixedly connected to the case 11, and the joint portion 322 is connected to the connecting pipe 33, the connection position of the adapter 32 and the case 11 can thus be located in an outer peripheral region of the connection position of the adapter 32 and the connecting pipe 33. On one hand, this ensures that the connection position of the adapter 32 and the case 11 does not interfere with the connection position of the adapter 32 and the connecting pipe 33, thereby facilitating the installation and fixation of the adapter 32 to the case 11 and the connection of the adapter 32 to the connecting pipe 33. On the other hand, compared to the manner in which "the connection position of the adapter and the connecting pipe is located at the outer periphery of the connection position of the adapter and the case", connecting the adapter 32 and the case 11 at the outer periphery of the connection position of the adapter 32 and the connecting pipe 33 helps utilize the connection between the adapter 32 and the case 11 to improve the connection reliability and stability between the adapter 32 and the connecting pipe 33.

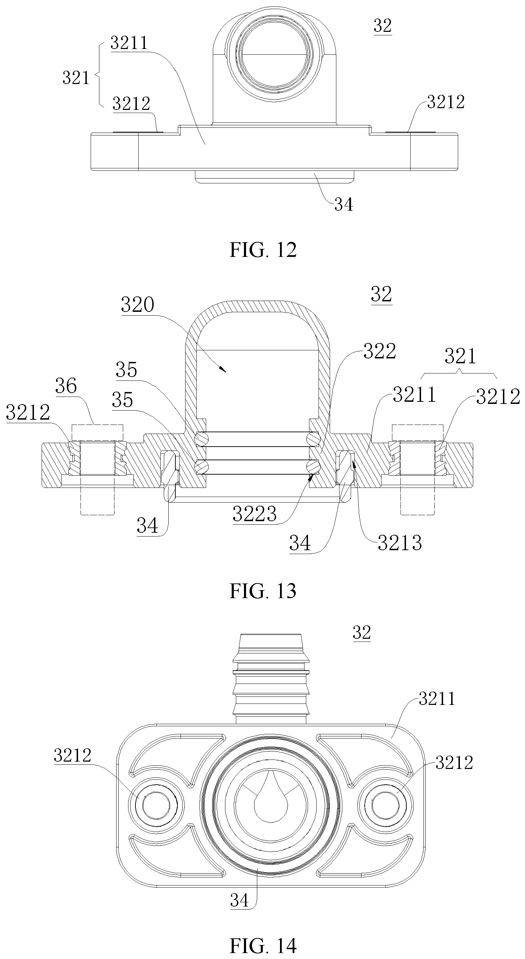

Referring to FIG. 10 to FIG. 13, FIG. 12 is an orthogonal projection schematic diagram of the adapter 32 shown in FIG. 11; and FIG. 13 is a cross-sectional view of the adapter 32 shown in FIG. 12. In some embodiments of this application, the flange portion 321 includes a flange plate 3211 and an insert 3212 provided on the flange plate 3211, and the flange portion 321 is connected to the case 11 through a connecting member 36 running through the insert 3212.

The insert 3212 refers to a part embedded in the flange plate 3211. For example, a through hole may be formed in the insert 3212 to facilitate the connecting member 36 running through the insert 3212, in which case the insert 3212 can be understood as a through hole insert. The type and connection manner of the connecting member 36 are not limited. For example, the connecting member 36 may be a bolt, a screw, a rivet, or the like, and may use a manner such as threaded connection or pull-riveting connection to realize fixed connection between the adapter 32 and the case 11. Certainly, this application is not limited thereto. For example, in other embodiments of this application, the case 11 and the adapter 32 may be connected by adhesion, welding, or the like, or under the premise of adhesion or welding, the connecting member 36 may also be used for connection to enhance the connection reliability.

The connection manner between the flange plate 3211 and the insert 3212 is not limited and may be specifically selected according to the material of the flange plate 3211. For example, they may be assembled or embedded via interference fit, or integrally formed via secondary injection molding. The material of the insert 3212 is not limited. For example, a material that improves the connection reliability, such as a metal material, may be selected.

In the above technical solution, by providing the insert 3212 on the flange plate 3211 and utilizing the insert 3212 running through the connecting member 36 to realize the connection between the flange portion 321 and the case 11, the material requirement for the flange plate 3211 can be lowered. For example, the flange plate 3211 may be made of plastic or metal, thereby improving the design flexibility.

For example, when the flange plate 3211 is made of plastic, the processing difficulty and manufacturing cost of the adapter 32 can be reduced. Moreover, by providing the insert 3212 to arrange the connecting member 36, the material strength of the insert 3212 can be set greater than the material strength of the flange plate 3211 to improve the connection reliability between the adapter 32 and the case 11.

For example, when the flange plate 3211 and the joint portion 322 are an integrally formed part, if the flange plate 3211 is made of plastic, the processing difficulty of the adapter 32 can be reduced, facilitating processing of the adapter 32. Moreover, if the integrally formed structure of the flange plate 3211 and the joint portion 322 is relatively complex, to reduce the processing and manufacturing difficulty, the flange plate 3211 can be made of plastic.

Still referring to FIG. 10 to FIG. 13, in some embodiments of this application, a first sealing member 34 is sealingly fitted between the flange portion 321 and the case 11, and the first sealing member 34 is arranged around a fitting surface between the joint portion 322 and the connecting pipe 33.

In the above technical solution, by providing the first sealing member 34 between the flange portion 321 and the case 11 and arranging the first sealing member 34 around the fitting surface between the joint portion 322 and the connecting pipe 33, the entire circumferential region where the connecting pipe 33 and the joint portion 322 are connected can be sealed by the first sealing member 34. This can reduce the risk of heat exchange fluid overflowing from the fitting position of the connecting pipe 33 leaking from the fitting position between the adapter 32 and the case 11 into the case 11, thereby improving the reliability of the battery 100. Moreover, the arrangement position of the first sealing member 34 is clear, facilitating easy assembly of the first sealing member 34, thereby reducing the assembly difficulty and design difficulty.

For example, still referring to FIG. 12 and FIG. 13, with reference to FIG. 14, FIG. 14 is a bottom view of the adapter 32 shown in FIG. 12. The flange portion 321 has a first annular groove 3213, and the first sealing member 34 is a first sealing ring and embedded in the first annular groove 3213. Thus, the first sealing member 34 has a simple structure and is easy to process. By embedding the first sealing member 34 in the first annular groove 3213, the installation stability of the first sealing member 34 can be improved, so that the first sealing member 34 can be reliably sealingly fitted between the flange portion 321 and the case 11 and surround the fitting surface between the joint portion 322 and the connecting pipe 33. This further reduces the risk of heat exchange fluid overflowing from the fitting position of the connecting pipe 33 leaking from the fitting position between the adapter 32 and the case 11 into the case 11, further improving the reliability of the battery 100. In addition, the flange portion 321 is easily machined to be have a larger thickness than the case 11, thereby facilitating increase of the groove depth of the first annular groove 3213. This improves the fitting stability between the first sealing member 34 and the first annular groove 3213, and further improves the installation stability of the first sealing member 34, thereby further improving the sealing effect of the first sealing member 34.

Still referring to FIG. 10 to FIG. 13, in some embodiments of this application, the connecting pipe 33 is inserted into the joint portion 322. In the above technical solution, inserting the connecting pipe 33 into the joint portion 322 can realize direct sleeving connection between the connecting pipe 33 and the joint portion 322, thereby eliminating the need for other connecting members, and improving the compactness of fitting. This also facilitates the assembly connection between the connecting pipe 33 and the adapter 32, reducing the structural complexity of the joint portion 322, and facilitating the processing of the adapter 32.

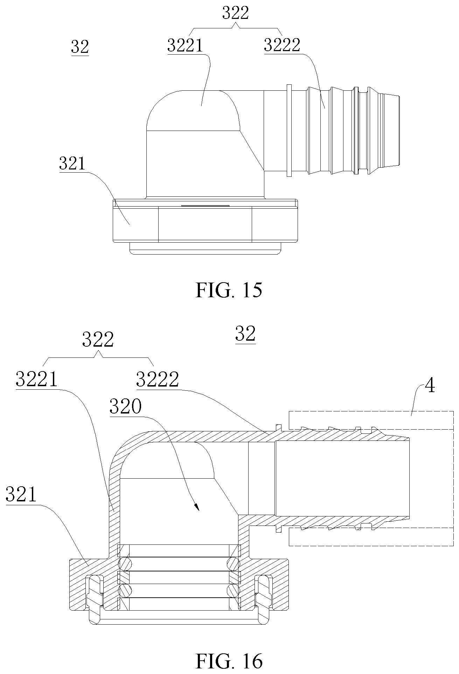

Referring to FIG. 15 and FIG. 16, FIG. 15 is a side view of the adapter 32 shown in FIG. 11, and FIG. 16 is a cross-sectional view of the adapter 32 shown in FIG. 15. In some embodiments of this application, the joint portion 322 includes an insertion section 3221 and a pipe connection section 3222, where the joint portion 322 is in a form of an elbow and is bent at a joint between the insertion section 3221 and the pipe connection section 3222, the connecting pipe 33 is inserted into the insertion section 3221, and the pipe connection section 3222 is sleeved with an adapter pipe 4.

In the above technical solution, since the joint portion 322 includes the pipe connection section 3222 that can be sleeved with the adapter pipe 4, the joint portion 322 can be conveniently connected to a heat exchange liquid circulation system, simplifying the structure and improving the assembly efficiency. Moreover, since the joint portion 322 is in the form of an elbow and is bent at the joint between the insertion section 3221 and the pipe connection section 3222, the direction for connecting the pipe connection section 3222 and the adapter pipe 4 (for example, a horizontal direction) can intersect with (for example, be orthogonal to) the direction for connecting the insertion section 3221 and the connecting pipe 33 (for example, a vertical direction), reducing the height space required for the connection between the adapter 32 and the adapter pipe 4 (the height direction refers to the direction for connecting the insertion section 3221 and the connecting pipe 33), thereby reducing the space occupation at the adapter 32.

Referring to FIG. 16 to FIG. 17, FIG. 17 is a partial cross-sectional view of a heat exchange assembly 3 fitted with the case 11 according to some embodiments of this application. In some embodiments of this application, the heat exchange assembly 3 further includes: a second sealing member 35, where the second sealing member 35 is sealingly fitted between the adapter 32 and the connecting pipe 33.

In the above technical solution, by providing the second sealing member 35 between the adapter 32 and the connecting pipe 33, the risk of heat exchange fluid overflowing from the fitting position between the adapter 32 and the connecting pipe 33 can be reduced, thereby improving the reliability of the battery 100. Moreover, the arrangement position of the second sealing member 35 is clear, facilitating easy assembly of the second sealing member 35, thereby reducing the assembly difficulty and design difficulty.

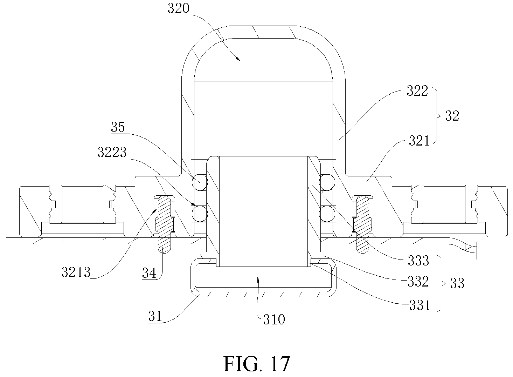

For example, referring to FIG. 16 and FIG. 17, when the connecting pipe 33 is inserted into the adapter 32, the second sealing member 35 may surround the connecting pipe 33, that is, the second sealing member 35 is located between the outer periphery of the connecting pipe 33 and the inner periphery of the adapter 32. In this way, the connection between the connecting pipe 33 and the adapter 32 is convenient, the installation stability of the second sealing member 35 can be improved, and the entire circumferential region of the connecting pipe 33 can be sealed by the second sealing member 35, thereby further improving the sealing effect and reducing the risk of heat exchange fluid overflowing from the fitting position between the adapter and the connecting pipe.

For example, referring to FIG. 16 and FIG. 17, the adapter 32 has a second annular groove 3223, and the second sealing member 35 is a second sealing ring and embedded in the second annular groove 3223.

In the above technical solution, the second sealing member 35 has a simple structure and is easy to process. By embedding the second sealing member 35 in the second annular groove 3223, the installation stability of the second sealing member 35 can be improved, so that the second sealing member 35 can be reliably sealingly fitted between the adapter 32 and the connecting pipe 33. This further reduces the risk of heat exchange fluid overflowing from the fitting position between the adapter 32 and the connecting pipe 33, and further improves the reliability of the battery 100. In addition, since the connecting pipe 33 needs to penetrate through the case 11, the adapter 32 is easily machined to have a greater wall thickness than the connecting pipe 33, thereby facilitating increase of the groove depth of the second annular groove 3223. This improves the fitting stability between the second sealing member 35 and the second annular groove 3223, and further improves the installation stability of the second sealing member 35, thereby further improving the sealing effect of the second sealing member 35.

For example, referring to FIG. 16 and FIG. 17, a plurality of second sealing members 35 are provided and spaced apart along an axial direction of the connecting pipe 33. Thus, by utilizing the axial space of the connecting pipe 33 to cleverly arrange a plurality of second sealing members 35, multi-stage sealing and blocking can be achieved, thereby improving the sealing effect.

Referring to FIG. 17, in some embodiments of this application, the connecting pipe 33 is in insertion fit with the heat exchanger 31. In the above technical solution, the insertion fit between the connecting pipe 33 and the heat exchanger 31 allows direct insertion between the connecting pipe 33 and the heat exchanger 31, thereby eliminating the need for other connecting members, and improving the compactness of fitting. This also facilitates the assembly connection between the connecting pipe 33 and the heat exchanger 31, reducing the structural complexity of the heat exchanger 31, and facilitating the processing of the heat exchanger 31.

Referring to FIG. 5 and FIG. 6, in some embodiments of this application, when the connecting pipe 33 is in insertion fit with the heat exchanger 31, a connection hole 311 is provided on a side of the heat exchanger 31 facing the case 11, an end portion of the connecting pipe 33 located outside the case 11 has an extension section 331, and the extension section 331 is inserted into the connection hole 311. Thus, it is only necessary to machine the connection hole 311 on the heat exchanger 31, thereby simplifying processing of the heat exchanger 31. Moreover, since the connection hole 311 is provided on the side of the heat exchanger 31 facing the case 11, this facilitates insertion of the connecting pipe 33 penetrating through the case 11, thereby facilitating insertion between the connecting pipe 33 and the heat exchanger 31.

Certainly, this application is not limited thereto. For example, in other embodiments of this application, a protruding annular boss may be provided on the heat exchanger 31, an inner ring of the annular boss communicates with the first flow passage 310, and the end portion of the connecting pipe 33 located outside the case 11 sleeves the annular boss.

As shown in FIG. 17, for example, the end portion of the connecting pipe 33 located outside the case 11 further has a stepped section 332, and the stepped section 332 abuts against a surface of the heat exchanger 31 on the side facing the case 11. Thus, by providing the stepped section 332 at the end portion of the connecting pipe 33 to abut against the outer surface of the heat exchanger 31, the depth of insertion of the extension section 331 into the connection hole 311 can be limited to prevent the extension section 331 from extending too far into the connection hole 311 and blocking the flow passage, so that the connecting pipe 33 and the heat exchanger 31 can be in reliable communication. Moreover, by utilizing the abutment between the stepped section 332 and the heat exchanger 31, the fitting stability and sealing between the connecting pipe 33 and the heat exchanger 31 can also be improved.

In some embodiments, the connecting pipe 33 and the heat exchanger 31 may be subjected to operations such as adhesion or welding at the fitting position to improve the fitting stability and sealing between the connecting pipe 33 and the heat exchanger 31. For example, the connecting pipe 33 may be adhesively bonded or welded to the heat exchanger 31through the stepped section 332, increasing the connection area and improving the fitting stability and sealing between the connecting pipe 33 and the heat exchanger 31. Alternatively, for example, the connecting pipe 33 may be in interference fit with or adhesively bonded or welded to the heat exchanger 31 through the extension section 331, realizing the connection between the connecting pipe 33 and the heat exchanger 31.

As shown in FIG. 17, for example, the connecting pipe 33 includes a pipe body 333, where taking a cross section of the connecting pipe 33 as a projection plane, a projection of the stepped section 332 extends beyond a projection contour range of the pipe body 333, and a projection of the extension section 331 is located within the projection contour range of the pipe body 333. For example, when the cross sections of the extension section 331, the stepped section 332, and the pipe body 333 are all annular and inner ring contours coincide, the outer ring diameter of the extension section 331 is smaller than the outer ring diameter of the pipe body 333, and the outer ring diameter of the pipe body 333 is smaller than the outer ring diameter of the stepped section 332.

Thus, the stepped section 332 has a larger area, allowing for more stable abutment against the heat exchanger 31, further improving the fitting stability and sealing between the connecting pipe 33 and the heat exchanger 31. This also helps reduce the aperture of the connection hole 311, improving the structural strength of the heat exchanger 31 at the connection hole 311. For example, the heat exchanger 31 is in the form of a flat tube, the width of the flat tube needs to be greater than the outer diameter of the extension section 331. When the outer diameter of the extension section 331 is reduced, there is no need to widen the flat tube to provide the connection hole 311. Moreover, the flat tube may be made of aluminum or steel. For example, the flat tube may be made of aluminum, to ensure that the overall weight of the battery is light.

In some embodiments of this application, the connecting pipe 33 is welded to the heat exchanger 31, and the heat exchanger 31 is adhesively bonded or welded to the case 11. For example, during assembly, the connecting pipe 33 may be first inserted and welded to the heat exchanger 31, then the connecting pipe 33 may be led through the case, and then the heat exchanger 31 may be adhesively bonded or welded to the case 11.

In the above technical solution, since the connecting pipe 33 is welded to the heat exchanger 31 and the heat exchanger 31 is adhesively bonded or welded to the case 11, reliable connection between the connecting pipe 33 and the heat exchanger 31 and reliable connection between the heat exchanger 31 and the case 11 can be implemented, thereby improving the operational stability and reliability of the heat exchange assembly 3.

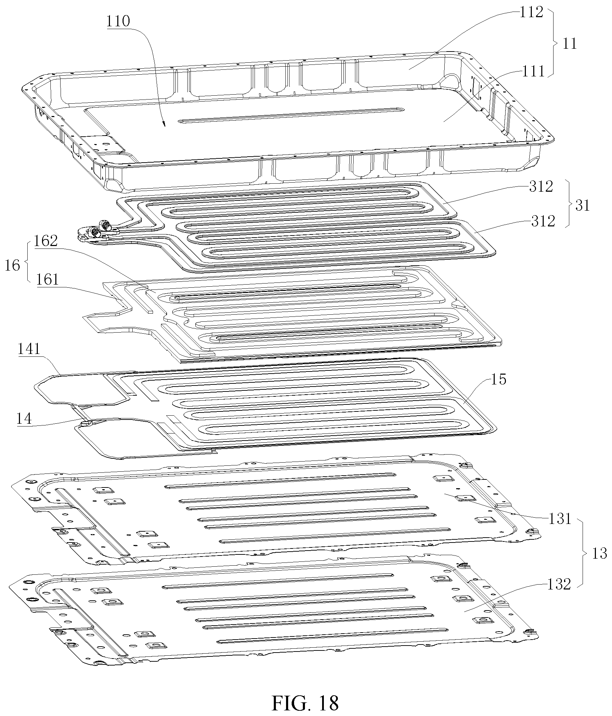

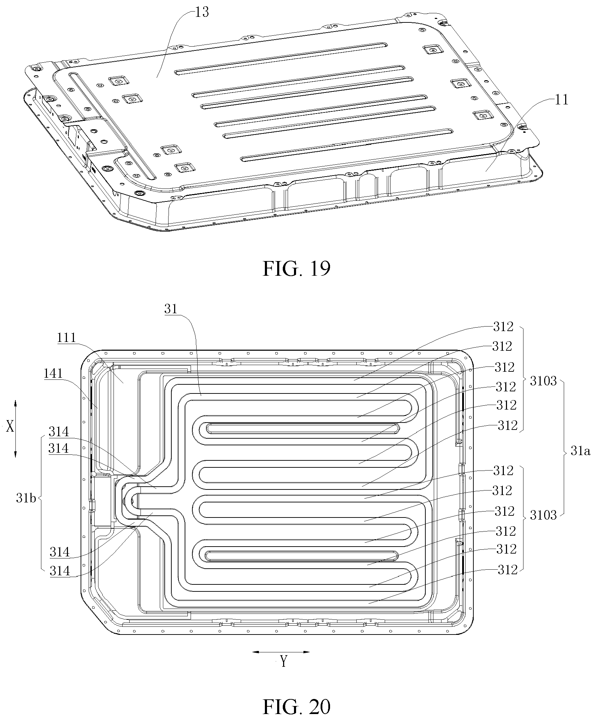

Referring to FIG. 18 and FIG. 19, FIG. 18 is an exploded view of a heat exchange assembly 3 and a case assembly 1 according to some embodiments of this application, and FIG. 19 is a bottom view of the assembled heat exchange assembly 3 and the case assembly 1 shown in FIG. 18. In some embodiments of this application, the case assembly 1 further includes: a bottom guard plate 13, where the bottom guard plate 13 is disposed below a bottom wall 111 of the case 11, and the heat exchanger 31 is disposed between the bottom wall 111 and the bottom guard plate 13.

Thus, by arranging the heat exchanger 31 below the bottom wall 111 of the case 11, the heat exchanger 31 can exchange heat with the cell assembly 2 over a relatively large range, improving the temperature regulation effect and efficiency for the cell assembly 2. Moreover, by providing the bottom guard plate 13 below the heat exchanger 31, the heat exchanger 31 can be more reliably protected, reducing the risk of damage to the heat exchanger 31 caused by collision or impact, and improving the operational reliability of the heat exchanger 31.

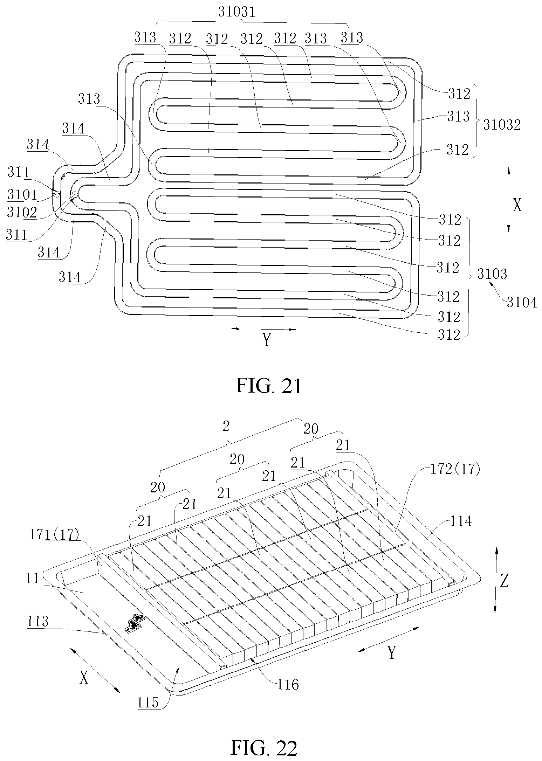

Referring to FIG. 18, FIG. 20, and FIG. 21, FIG. 20 is an assembly view of the heat exchanger and the case shown in FIG. 18, and FIG. 21 is a schematic diagram of the heat exchanger shown in FIG. 20. In some embodiments of this application, the case assembly 1 further includes: a sealing member 14, where the sealing member 14 is sealingly fitted between the bottom wall 111 and the bottom guard plate 13 and includes an outer peripheral portion 141 arranged around the heat exchanger 31, that is, the entire heat exchanger 31 is located in a region enclosed by the outer peripheral portion 141, and the connecting pipe 33 corresponds to the region enclosed by the outer peripheral portion 141 and penetrates through the bottom wall 111.

Thus, by arranging the position where the connecting pipe 33 penetrates through the bottom wall 111 within the region surrounded by the outer peripheral portion 141, when the outer peripheral portion 141 is sealingly fitted between the bottom wall 111 and the bottom guard plate 13, mud, water, particles, and the like outside the case assembly 1 are not easy to pass through the outer peripheral portion 141 to enter between the bottom wall 111 and the bottom guard plate 13 and flow to the position where the connecting pipe 33 penetrates through the bottom wall 111 to enter the case 11, thereby improving the reliability of the battery 100. Moreover, since the outer peripheral portion 141 surrounds the heat exchanger 31, mud, water, particles, and the like outside the case assembly 1 are not easy to pass through the outer peripheral portion 141 to enter between the bottom wall 111 and the bottom guard plate 13 and contaminate or corrode the heat exchanger 31 between the bottom wall 111 and the bottom guard plate 13, thereby improving the reliability and service life of the heat exchanger 31.

Certainly, this application is not limited thereto. For example, in some other embodiments of this application, the heat exchanger 31 may only have a major part located in the region enclosed by the outer peripheral portion 141, while the remaining part (for example, a local part or an edge) is located in a region not enclosed by the outer peripheral portion 141, or clamped between the outer peripheral portion 141 and the bottom wall 111, or clamped between the outer peripheral portion 141 and the bottom guard plate 13, or wrapped within the outer peripheral portion 141.

If the adapter is disposed outside the case, limited by the ground clearance requirement of the vehicle, the space between the bottom wall of the case and the bottom guard plate is insufficient, and the adapter needs to be disposed on the side or above the side wall of the case. Thus, the heat exchanger between the bottom wall of the case and the bottom guard plate needs to be connected to the adapter through a longer external pipe. This, on the one hand, increases the material costs of the external pipe and prolongs the flow passage, increasing the flow resistance of the heat exchange liquid. On the other hand, the external pipe needs to run through the sealing position between the bottom wall of the case and the bottom guard plate. The penetration position of the external pipe has an irregular structure, increasing the sealing difficulty and sealing cost at this position, degrading the sealing effect between the bottom wall and the bottom guard plate, and reducing the reliability of the battery. Moreover, the external adapter is easily damaged by collision, with a risk of leakage, affecting the overall operational stability and reliability of the heat exchange assembly.

In the embodiments of this application, the adapter 32 is disposed inside the case 11, there is no need to introduce an external pipe to connect the external heat exchanger 31 and the internal adapter 32, thereby shortening the flow passage, and reducing the flow resistance of the heat exchange liquid. Since there is no need for the external pipe to penetrate through, the bottom wall 111 of the case 11 and the bottom guard plate 13 can be simply and reliably sealed through the sealing member 14, reducing the sealing difficulty and sealing cost. Moreover, the internal adapter 32 is not easily damaged by collision, reducing the leakage risk, improving the operational stability and reliability of the heat exchange assembly 3, and improving the reliability of the battery 100 during transportation and in-vehicle use.

In some embodiments of this application, referring to FIG. 10 and FIG. 18, an adhesive layer 15 is provided between the heat exchanger 31 and each of the bottom wall 111 and the bottom guard plate 13. That is, a side surface of the heat exchanger 31 facing the bottom wall 111 is fixedly connected to the bottom wall 111 through the adhesive layer 15, and a side surface of the heat exchanger 31 facing the bottom guard plate 13 is also fixedly connected to the bottom guard plate 13 through the adhesive layer 15. Thus, on the one hand, the stability of heat transfer between the heat exchanger 31 and the bottom wall 111 can be improved, and on the other hand, the protection of two side surfaces of the heat exchanger 31 can be improved, thereby protecting the heat exchanger 31.

It is worth noting that the arrangement order of the adhesive layer 15 is not limited, for example, it may be applied to both sides of the heat exchanger 31, or applied to a side of the bottom wall 111 facing the heat exchanger 31, or applied to a side of the bottom guard plate 13 facing the heat exchanger 31, or the like. For example, the adhesive layer 15 may be structural adhesive, high thermal conductivity double-sided adhesive, or the like.

In some embodiments of this application, referring to FIG. 10 and FIG. 18, the heat exchanger 31 includes at least one heat exchange tube extending in a bent manner, and the case assembly 1 further includes a foaming member 16, where the foaming member 16 is disposed between the bottom wall 111 and the bottom guard plate 13, and the foaming member 16 includes a first foaming portion 161 arranged around the heat exchanger 31, and a second foaming portion 162 disposed between adjacent tube sections of the same heat exchange tube or between adjacent heat exchange tubes.

Thus, the foaming member 16 can be utilized to fill the space between the bottom wall 111 and the bottom guard plate 13 excluding the heat exchanger 31, that is, complementarily arranged with the heat exchanger 31, so that the foaming member 16 can support the bottom wall 111 and the bottom guard plate 13. When the guard plate 13 is subjected to collision or impact, the foaming member 16 can buffer the impact force, reducing the force of the bottom guard plate 13 impacting the heat exchanger 31 or the case 11, thereby protecting the heat exchanger 31 and the cell assembly 2 inside the case 11. Moreover, the foaming member 16 can also fill gaps between the heat exchange tubes, to support and limit the positions of the heat exchange tubes, so that the heat exchange tubes can stably stay in the arrangement positions to provide stable temperature regulation.

In some embodiments of this application, referring to FIG. 10 and FIG. 18, the foaming member 16 is connected to the bottom guard plate 13, and an upper surface of the heat exchanger 31 is higher than an upper surface of the foaming member 16, and the side surface of the heat exchanger 31 facing the bottom wall 111 is disposed closer to the bottom wall 111 than the side surface of the foaming member 16 facing the bottom wall 111. Thus, the molding difficulty of the foaming member 16 can be reduced, and the thickness uniformity of the foaming member 16 can be favorably controlled, so that the arrangement of the foaming member 16 does not interfere with the heat transfer cooperation between the heat exchanger 31 and the bottom wall 111. This improves the stability and reliability of heat transfer between the heat exchanger 31 and the bottom wall 111, and improves the temperature regulation effect for the cell assembly 2, thereby improving the operational reliability of the battery 100.

In addition, when the adhesive layer 15 is provided between the heat exchanger 31 and the bottom wall 111, connecting the foaming member 16 to the bottom guard plate 13 helps reduce the difficulty of arranging the adhesive layer 15 between the heat exchanger 31 and the bottom wall 111, and helps improve the uniformity of the adhesive layer 15 provided between the heat exchanger 31 and the bottom wall 111, thereby improving the stability and reliability of heat transfer between the heat exchanger 31 and the bottom wall 111. This helps improve the temperature regulation effect for the cell assembly 2, thereby improving the operational reliability of the battery 100.

For example, the foaming member 16 can be processed on the bottom guard plate 13 using a mold through a foaming process, thereby ensuring the thickness uniformity of the foaming member 16. Then adhesive can be applied to the heat exchanger 31 or the bottom wall 111, and then the heat exchanger 31 can be installed between the guard plate 13 having the foaming member 16 and the bottom wall 111. When the heat exchanger 31 protrudes toward the bottom wall 111 relative to the foaming member 16, the cooperation stability and reliability of the heat transfer between the heat exchanger 31 and the bottom wall 111 can be ensured.

In some other embodiments of this application, the bottom guard plate 13, the case 11, and the heat exchanger 31 can be first assembled in place, and then foaming liquid can be injected between the bottom guard plate 13 and the bottom wall 111 of the case 11 for foaming. In this case, the injection position of the foaming liquid needs to be considered to ensure uniform foaming height at different positions and avoid affecting the connection between the heat exchanger 31 and the case 11. Alternatively, in some other embodiments of this application, the foaming member 16 can be processed on the bottom wall 111 of the case 11 using a mold through a foaming process, and then the heat exchanger 31, the guard plate 13, and the like, can be assembled.

It is worth noting that the composition and material of the bottom guard plate 13 are not limited. For example, the bottom guard plate 13 may be a singlelayer plate, for example, may be a metal plate with an anti-corrosion layer on the outer surface. Alternatively, the bottom guard plate 13 may be composed of multiple layers. For example, with reference to FIG. 18, the bottom guard plate 13 includes a first plate 131 and a second plate 132, where the second plate 132 is located below the first plate 131, the first plate 131 may be made of metal, and the second plate 132 may be made of corrosion-resistant material, such as a PVC (abbreviated form of polyvinyl chloride, Polyvinyl chloride) material.

In some embodiments of this application, referring to FIG. 5, FIG. 6, and FIG. 21, the first flow passage 310 has a first port 3101 and a second port 3102, and the heat exchanger 31 has a connection hole 311 connected to the connecting pipe 33, where the connection hole 311 is provided in two, one being arranged corresponding to the first port 3101 and the other being arranged corresponding to the second port 3102, and the adapter 32 and the connecting pipe 33 are each provided in two, each connection hole 311 being disposed corresponding to one connecting pipe 33 and one adapter 32.

Thus, by providing two adapters 32 and two connecting pipes 33 in one-to-one correspondence and communication with the two ports of the first flow passage 310, that is, one port can communicate with one adapter 32 through one connecting pipe 33, and the other port can communicate with the other adapter 32 through the other connecting pipe 33, one adapter 32 can serve as a liquid inlet joint, and the other can serve as a liquid outlet joint. There is no need to provide two channels with opposite flow directions in each connecting pipe 33, so the pipe diameter of the connecting pipe 33 can be reduced, thereby reducing the aperture of the connection hole 311, reducing the sealing difficulty at the fitting position between the connection hole 311 and the connecting pipe 33, and improving the sealing reliability.

Moreover, since the two ports of the first flow passage 310 are respectively connected to the two adapters 32 through the two connecting pipes 33, the two ports of the first flow passage 310 do not need to be arranged together, the two connecting pipes 33 do not need to be arranged together, and the two adapters 32 do not need to be arranged together. This allows selection of relative positions of the two adapters 32 according to design requirements, making the design more flexible.

It is worth noting that which of the two adapters 32 is for liquid inlet and which is for liquid outlet may be specifically set according to actual requirements, or the two adapters 32 may be configured as switchable, that is, whether the adapter 32 is for liquid inlet or liquid outlet varies in different modes.

For example, referring to FIG. 21 and FIG. 21, the first flow passage 310 includes a plurality of heat exchange flow passages 3103 arranged in parallel, the plurality of heat exchange flow passages 3103 have one end converged to the first port 3101, and the plurality of heat exchange flow passages 3103 have the other end converged to the second port 3102. Two ends of each heat exchange flow passage 3103 are a first end and a second end. During operation of the heat exchange assembly 3, one of the first end and the second end serves as an inlet end, and the other serves as an outlet end, or the first end and the second end can switch between inlet and outlet states. The first end of each heat exchange flow passage 3103 converges to the first port 3101, and the second end of each heat exchange flow passage 3103 converges to the second port 3102.

Thus, since the first flow passage 310 includes a plurality of heat exchange flow passages 3103 arranged in parallel, when the total length of the first flow passage 310 is fixed, the length of each heat exchange flow passage 3103 can be shorter, for example, the sum of the lengths of the plurality of heat exchange flow passages 3103 is equal to the total length of the first flow passage 310, thereby improving the overall heat exchange efficiency of the first flow passage 310, and improving the temperature regulation effect of the heat exchanger 31 on the cell assembly 2. Moreover, by correspondingly converging two ends of each of the plurality of heat exchange flow passages 3103 to the two connecting pipes 33, the number of connecting pipes 33 and adapters 32 can be reduced, reducing material costs. Also, the number of connection holes 311 provided in the case 11 can be reduced, reducing the sealing surfaces and improving the sealing performance.

Certainly, this application is not limited thereto. For example, in some other embodiments of this application, there may be one connecting pipe 33, the connecting pipe 33 has a first channel and a second channel isolated from each other inside, there are two adapters 32 and both are connected to the connecting pipe 33, the first channel connects the first port 3101 and one adapter 32, and the second channel connects the second port 3102 and the other adapter 32.

It is worth noting that the form of the heat exchange flow passage 3103 is not limited, for example, may include, but is not limited to, either of the first heat exchange flow passage 3104 and the second heat exchange flow passage 3105 described below. For example, at least one of the plurality of heat exchange flow passages 3103 arranged in parallel may be the first heat exchange flow passage 3104, or at least one of the plurality of heat exchange flow passages 3103 arranged in parallel may be the second heat exchange flow passage 3105, or the plurality of heat exchange flow passages 3103 arranged in parallel may include at least one first heat exchange flow passage 3104 and at least one second heat exchange flow passage 3105.

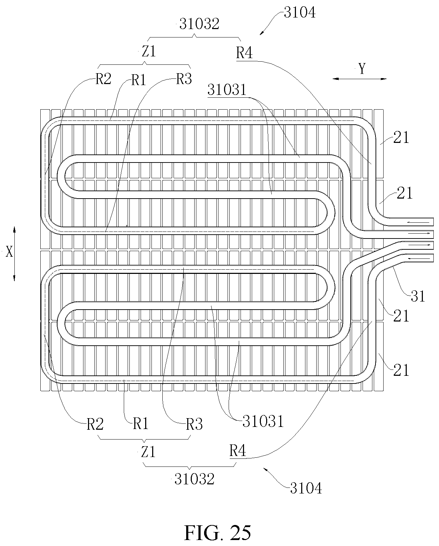

Referring again to FIG. 21 and FIG. 25, in some embodiments, the heat exchanger 31 includes at least one first heat exchange flow passage 3104, and the first heat exchange flow passage 3104 includes a first heat exchange section 31031 and a second heat exchange section 31032, where the second heat exchange section 31032 is bent to form a first U-shaped region Z1, the first heat exchange section 31031 is bent and disposed in the first U-shaped region Z1 and is connected in a bent manner to the second heat exchange section 31032 through the third heat exchange section, and the second heat exchange section 31032 is located at an outermost side in a circumferential direction of the first heat exchange flow passage 3103.

Since the battery cells 21 arranged on the periphery are closer to the side wall of the case assembly 1 than the internal battery cells 21, the peripheral battery cells 21 can more easily dissipate heat outward through structures such as the side wall of the case assembly 1, while the internal battery cells 21 are more difficult to dissipate heat and are greatly affected by heat dissipation of adjacent battery cells 21. As a result, the heat dissipation conditions of the battery cells 21 at different positions vary, leading to uneven temperature distribution between the peripheral battery cells 21 and the internal battery cells 21 in the battery 100 after the battery 100 operates. Consequently, the stability of the battery 100 during operation is poor, and the battery performance is prone to degradation.

In view of this, in the above technical solution, the second heat exchange section 31032 is bent to form the first U-shaped region Z1, the first heat exchange section 31031 is bent and disposed in the first U-shaped region Z1, and the second heat exchange section 31032 is disposed at the outermost side in the circumferential direction of the first heat exchange flow passage 3104. In this way, when the heat exchanger 31 of this embodiment is used to exchange heat with the cell assembly 2, at least part of the first U-shaped region Z1 formed by the peripheral second heat exchange section 31032 can be arranged opposite at least part of the battery cells 21 on the outer periphery of the battery 100, so that the second heat exchange section 31032 can exchange heat with at least part in an outer circumferential direction of the cell assembly 2. Moreover, the first heat exchange section 31031 in the first U-shaped region Z1 can be arranged opposite the internal battery cells 21, so that the heat exchanger 31 can compensate for the internal-external temperature difference caused by heat exchange between the peripheral battery cells 21 and the environment, making the heat exchange effects of the battery cells 21 on the periphery of the cell assembly 2 and the battery cells 21 inside the cell assembly 2 tend to be consistent. This helps mitigate the temperature difference of the cell assembly 2 in different environments, and improve the temperature uniformity of the battery 100, thereby improving the service life of the battery 100 to a certain extent.

For example, when the heat exchanger 31 heats and raises the temperature of the cell assembly 2, the heat exchange fluid may flow from the first heat exchange section 31031 to the second heat exchange section 31032, but the heat exchange fluid may also flow from the second heat exchange section 31032 to the first heat exchange section 31031. For example, when the heat exchange fluid flows from the second heat exchange section 31032 to the first heat exchange section 31031, the peripheral battery cells 21 of the cell assembly 2 can be heated first, and then the heat exchange fluid can cool the battery cells 21 at the middle position of the cell assembly 2. Since the peripheral battery cells 21 of the battery 100 dissipate more heat to the external environment, the temperature of the peripheral battery cells 21 of the battery 100 is easier to drop. The heat exchange fluid first heats the peripheral battery cells 21 of the battery 100, and the higher-temperature heat exchange fluid can raise the temperature of the peripheral battery cells 21 while compensating for the heat lost by the battery cells 21 due to heat dissipation to the external environment, meeting the heating needs. The battery cells 21 at the middle position of the cell assembly 2 have smaller contact area with the external environment and have less heat lost, and the lower-temperature heat exchange fluid flowing in the first heat exchange section 31031 can well meet the heating needs in cooperation with the heat generated by the battery cells 21 themselves. In this way, the heating effects obtained by the peripheral battery cells 21 of the battery 100 and the battery cells 21 at the middle position of the cell assembly 2 can be substantially consistent. As a result, the temperatures of the peripheral battery cells 21 of the battery 100 and the battery cells 21 at the middle position of the cell assembly 2 after heating become relatively consistent, resulting in a more even temperature distribution in the battery 100.

For example, when the heat exchanger 31 of this embodiment dissipates heat and cools the cell assembly 2, the heat exchange fluid may flow from the first heat exchange section 31031 to the second heat exchange section 31032, but the heat exchange fluid may also flow from the second heat exchange section 31032 to the first heat exchange section 31031. When the heat exchange fluid also flows from the first heat exchange section 31031 to the second heat exchange section 31032, the battery cells 21 at the middle position of the battery 100 (that is, the internal battery cells 21 on the inner side of the periphery) can be cooled first, and then the battery cells 21 at the circumferential positions of the battery 100 can be cooled. Since the heat dissipation condition of the battery cells 21 at the circumferential positions of the battery 100 is better than that of the internal battery cells 21, the lower-temperature heat exchange fluid of the first heat exchange section 31031 can better meet the heat dissipation demand of the battery cells 21 at the middle position of the battery 100. Since the battery cells 21 at the circumferential positions can directly dissipate heat naturally toward the external environment, when the temperature of the heat exchange fluid of the second heat exchange section 31032 is slightly higher, the heat dissipation demand of the peripheral battery cells 21 can still be met, thereby making the cooling effects obtained by the battery cells 21 at the circumferential position of the battery 100 and the battery cells 21 at the middle position of the battery 100 substantially consistent. As a result, the temperatures of the battery cells 21 at the circumferential positions of the battery 100 and the battery cells 21 at the middle position of the battery 100 after cooling and heat dissipation become relatively consistent, resulting in a more even temperature distribution in the battery 100.

Referring to FIG. 21 and FIG. 22, FIG. 22 is an assembly view of partial components of a battery according to some embodiments of this application. In some embodiments, the cell assembly 2 includes a plurality of battery units 20 arranged along a first direction X, each battery unit 20 includes a plurality of battery cells 21 sequentially stacked along a second direction Y, and at least part of the second heat exchange section 31032 correspondingly exchanges heat with the plurality of battery cells 21 located at an outermost periphery of the cell assembly 2 in a circumferential direction. For example, the thickness direction of the battery 100 is a third direction Z, and one of the first direction X and the second direction Y is the width direction of the battery 100, and the other is the length direction of the battery 100.

In the above technical solution, by coordinating the arrangement of the battery cells 21 and the extending arrangement of the first heat exchange flow passage 3104, and arranging at least part of the second heat exchange section 31032 to correspondingly exchange heat with the peripheral battery cells 21, for example, in contact for heat transfer, the heat exchange efficiency of the peripheral battery cells 21 can be improved. This can further balance the temperature difference caused by the greater heat dissipation of the peripheral battery cells 21 compared to the inner battery cells 21 in the battery 100.

In some embodiments, referring to FIG. 25, the second heat exchange section 31032 includes a first segment R1, a second segment R2, and a third segment R3 sequentially bent and connected to construct the first U-shaped region Z1, where the first segment R1 and the third segment R3 both extend along the second direction Y, and the second segment R2 extends along the first direction X. In the above technical solution, the first U-shaped region Z1 can have a wider coverage range, facilitating heat exchange with the peripheral battery cells 21 of the cell assembly 2, and further improving the temperature uniformity of the battery 100.

In some embodiments, referring to FIG. 25, the second heat exchange section 31032 further includes a fourth segment R4 connected in a bent manner to the first segment R1, where the fourth segment R4 and the second segment R2 are disposed on two sides of the first segment R1 along the second direction Y, and the fourth segment R4 extends in the first direction X toward a direction approaching the third segment R3. Thus, the fourth segment R4 can shield at least part of the opening of the first U-shaped region Z1, so that the second heat exchange section 31032 located on the outer periphery of the first heat exchange flow passage 3104 can exchange heat with the peripheral battery cells 21 of the cell assembly 2 over a larger range, further improving the temperature uniformity of the battery 100.

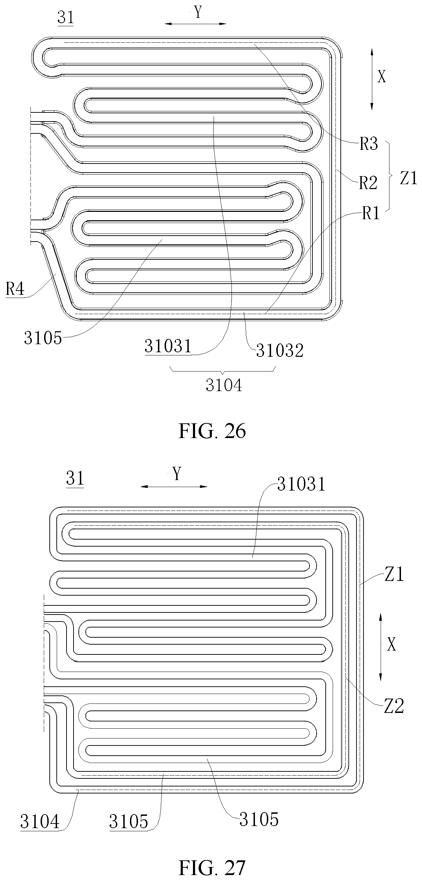

In some embodiments, referring to FIG. 26 and FIG. 27, the heat exchanger 31 further includes at least one second heat exchange flow passage 3105, and the second heat exchange flow passage 3105 and the first heat exchange flow passage 3104 are bent in a same plane, and the second heat exchange flow passage 3105 is bent and disposed in the first U-shaped region Z1.

For example, the embodiment of FIG. 26 shows one cooperation mode between one first heat exchange flow passage 3104 and one second heat exchange flow passage 3105. For example, the embodiment of FIG. 27 shows one cooperation mode between one first heat exchange flow passage 3104 and two second heat exchange flow passages 3105.

In the above technical solution, by providing at least one first heat exchange flow passage 3104 and at least one second heat exchange flow passage 3105, and coordinating their relative positional relationship, the arrangement of the heat exchange flow passages can be flexibly designed according to the cooling requirement of the battery 100, thereby further optimizing the temperature regulation effect on the cell assembly and improving the temperature uniformity of the battery 100.

In some embodiments, referring to FIG. 27, at least one second heat exchange flow passage 3105 is bent to form a second U-shaped region Z2, and at least part of the first heat exchange section 31031 is disposed in the second U-shaped region Z2 of the second heat exchange flow passage 3105.

For example, FIG. 27 shows that one second heat exchange flow passage 3105 is bent to form the second U-shaped region Z2, at least part of the first heat exchange section 31031 is disposed in the second U-shaped region Z2 of this second heat exchange flow passage 3105, and the other second heat exchange flow passage 3105 is also disposed in the second U-shaped region Z2 of this second heat exchange flow passage 3105.

In the above technical solution, by bending at least one second heat exchange flow passage 3105 to form the second U-shaped region Z2 and arranging at least part of the first heat exchange section 31031 in the second U-shaped region Z2 of the second heat exchange flow passage 3105, coordination between the first heat exchange flow passage 3104 and the second heat exchange flow passage 3105 is facilitated, thereby further improving the temperature uniformity of the battery 100.

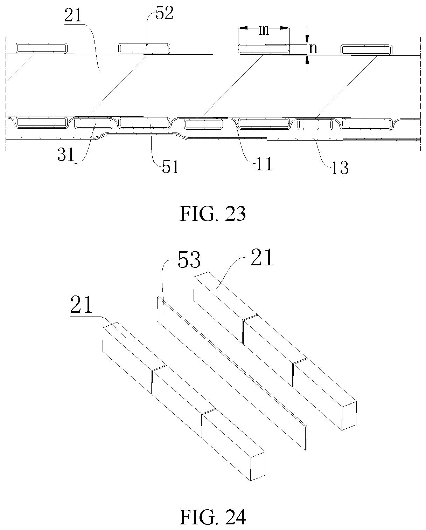

Referring to FIG. 21 and FIG. 23, FIG. 23 is a cross-sectional view of partial components of a battery according to some embodiments of this application. In some embodiments, the heat exchanger 31 includes at least one heat exchange tube extending in a bent manner, where one heat exchange flow passage 3103 is defined in each heat exchange tube. From this, it can be known that when the heat exchanger 31 includes a plurality of heat exchange tubes extending in a bent manner, the heat exchanger 31 includes a plurality of heat exchange flow passages 3103.

For example, the heat exchange tube may be made of aluminum or steel. For example, the heat exchange tube is made of aluminum, to ensure that the overall weight of the battery 100 is light.

For example, the heat exchange tube is arcuately bent at the bending position. The arcuate bending can reduce the flow resistance of the fluid, reduce pressure drop, so the heat exchange tube being arcuately bent at the bending position can improve the flow rate of the heat exchange fluid in the heat exchange flow passage 3103, thereby increasing the heat exchange efficiency of the heat exchanger 31.

For example, the heat exchange tube is a flat tube structure. The flat tube refers to a tube shape with a width m greater than a thickness n. A flow passage can be formed in the flat tube, and heat exchange liquid can be introduced into the flow passage to exchange heat with the cell assembly 2, realizing the temperature regulation effect on the battery 100. Typically, the heat exchanger used in batteries is a double-layer brazed plate structure, that is, formed by brazing two layers of plates, with a heat exchange flow passage formed between the two layers of plates. For example, the flat tube can be formed by splicing a plurality of extruded tubes, and the thickness of the flat tube can be much smaller than the thickness of the double-layer brazed plate structure, thereby occupying smaller space, improving the capacity of the battery 100, and reducing the weight, volume, and cost of the battery 100.

Referring to FIG. 20 and FIG. 21, in some embodiments, the heat exchanger 31 includes a main body portion 31a and a connection portion 31b, where the main body portion 31a includes a plurality of first tubes 312 spaced apart along the first direction X and extending along the second direction Y, the connection portion 31b is connected to an end of the main body portion 31a in the second direction Y, the heat exchanger 31 has a connection hole 311 connected to the connecting pipe 33, and the connection hole 311 is provided on the connection portion 31b.

Thus, by providing the connection hole 311 on the connection portion 31b located at one end of the main body portion 31a, connections for liquid inlet/outlet can be concentrated at the end portion of the heat exchanger 31, thereby facilitating connection of the adapter 32 to the liquid inlet/outlet path of the temperature regulation circulation system. Moreover, since the main body portion 31a includes a plurality of first tubes 312, the plurality of first tubes are spaced apart along the first direction X, and each first tube 312 extends along the second direction Y, the main body portion 31a has a simple structure and can cover a larger range, improving the temperature regulation effect.

For example, referring to FIG. 20 and FIG. 21, the main body portion 31a may further include a plurality of second tubes 313, where the second tube 313 is located at the end portion of the first tube 312 in the second direction Y, and the first tubes 312 can be connected through the second tube 313, thereby further simplifying the structure of the main body portion 31a.

In some embodiments, referring to FIG. 20 and FIG. 21, when "the heat exchange flow passage 3103 includes a first heat exchange section 31031 and a second heat exchange section 31032, where the second heat exchange section 31032 is bent to form a U-shaped region, the first heat exchange section 31031 is bent and disposed in the U-shaped region and is connected in a bent manner to the second heat exchange section 31032, and the second heat exchange section 31032 is located at an outermost side of the heat exchange flow passage 3103 in a circumferential direction", the first heat exchange section 31031 may include two first tubes 312 and one second tube 313, the second heat exchange section 31032 may include several first tubes 312 and several second tubes 313, and one first tube 312 of the first heat exchange section 31031 is connected to one first tube 312 of the second heat exchange section 31032 through the second tube 313. This can simplify the structure and facilitate processing.

In some embodiments, referring to FIG. 20 and FIG. 21, the connection portion 31b includes third tubes 314 located on two sides of the connection hole 311 in the first direction X, and two third tubes 314 on two sides of at least one connection hole 311 extend in directions away from each other in a direction from the connection hole 311 to the main body portion 31a.

This facilitates dispersion of the flat tubes at the connection portion 31b, and prevents the problem of uneven heat exchange caused by the heat exchange capacity at the connection portion 31b exceeding the heat exchange capacity of the main body portion 31a due to concentration of the flat tubes at the connection portion 31b, thereby improving the temperature uniformity of temperature regulation and improving the operational reliability and stability of the battery 100.

Referring to FIG. 18 and FIG. 22, in some embodiments of this application, the case 11 is an integrally stamped part and includes a bottom wall 111 and a surrounding wall 112, where an accommodation space 110 is formed between the bottom wall 111 and the surrounding wall 112, and the battery cells 21 are installed in the accommodation space 110. For example, the case 11 may be made of sheet metal and stamped into a basin shape to include the bottom wall 111 and the surrounding wall 112.

Thus, since the bottom wall 111 and the surrounding wall 112 of the case 11 are integrally stamped, the sealing effect can be ensured with no need to consider sealing at the joint between the bottom wall 111 and the surrounding wall 112. This prevents mud and water from infiltrating into the case 11 from the joint between the bottom wall 111 and the surrounding wall 112 and affecting the cell assembly 2 inside the case 11, improving the reliability of the battery 100. Moreover, the integrally stamped case 11 does not need splicing, thereby improving the production efficiency.

In some embodiments of this application, as shown in FIG. 21 to FIG. 24, FIG. 24 is an exploded view of partial components of a battery according to some embodiments of this application, a thermal management system of the battery 100 further includes a temperature regulation member 5 disposed inside the case 11, where the temperature regulation member 5 is disposed on at least one of a bottom, a top, and a side of the battery cells 21. In the above technical solution, not only the heat exchanger 31 is provided outside the case 11, but also the temperature regulation member 5 is provided inside the case 11, which can improve the regulation effect of the battery 100.

For example, in some embodiments of this application, as shown in FIG. 22 to FIG. 24, the temperature regulation member 5 may include at least one of a first temperature regulation member 51, a second temperature regulation member 52, and a third temperature regulation member 53, where the first temperature regulation member 51 is disposed inside the case 11 and located at the bottom of the battery cells 21, the second temperature regulation member 52 is disposed inside the case 11 and located at the top of the battery cells 21, and the third temperature regulation member 53 is disposed inside the case 11 and located at the side of the battery cells 21. That is, the battery 100 may include only one of the first temperature regulation member 51, the second temperature regulation member 52, and the third temperature regulation member 53, or may include two of the first temperature regulation member 51, the second temperature regulation member 52, and the third temperature regulation member 53, or may include all three of the first temperature regulation member 51, the second temperature regulation member 52, and the third temperature regulation member 53. Thus, the temperature regulation member 5 can be arranged at an appropriate position according to actual situations to meet the temperature regulation demand of the battery 100.

For example, with reference to FIG. 24, adjacent battery cells 21 in the cell assembly 2 may have their large faces facing each other, and the third temperature regulation member 53 may be disposed between the large faces of the adjacent battery cells 21, so that it is located at the side of the battery cells 21, thereby improving the temperature regulation effect on the battery cells 21.

In addition, the thermal management system of the battery 100 is not limited to including only the temperature regulation member 5. For example, in some embodiments, with reference to FIG. 22, an expansion beam 17 may be provided inside the case 11. For example, there may be a plurality of expansion beams 17, the cell assembly 2 is clamped between the plurality of expansion beams 17. For example, there may be a first expansion beam 171 and a second expansion beam 172, the cell assembly 2 is clamped between the first expansion beam 171 and the second expansion beam 172. A heat exchange flow passage may be provided in the expansion beam 17 for temperature regulation, constituting a part of the thermal management system.

According to a second aspect embodiment of this application, an embodiment of this application further provides an electric apparatus including the battery 100 according to any of the above solutions, where the battery 100 is configured to provide electric energy for the electric apparatus. The electric apparatus may be any one of the devices or systems using the battery 100. Since the performance of the battery 100 is improved, the operational power performance of the electric apparatus can be improved.

The following describes a battery 100 according to a specific embodiment of this application.

As shown in FIG. 2 to FIG. 24, the battery 100 includes: a case assembly 1, a cell assembly 2, and a heat exchange assembly 3. The case assembly 1 includes: a case 11, a case cover 12, and a bottom guard plate 13, where the case 11 is an integrally stamped part and includes a bottom wall 111 and a surrounding wall 112 to form a stamped box shape with an open top, the cell assembly 2 is disposed in the case 11, the case cover 12 covers the top of the case 11, and the bottom guard plate 14 is disposed below the bottom wall 111 to protect the case 11.

A first expansion beam 171 is provided inside the case 11, where the first expansion beam 171 extends along a first direction X. Two opposite side walls of the surrounding wall 112 in a second direction Y are a first wall 113 and a second wall 114, respectively, space inside the case 11 and located between the first expansion beam 171 and the first wall 113 is a first space 115, space inside the case 11 and located between the first expansion beam 171 and the second wall 114 is a second space 116, the cell assembly 2 is disposed in the second space 116 and abuts against the first expansion beam 171, and the first space 115 is configured for installing high-voltage electrical appliances, and the like. It is worth noting that the first direction X and the second direction Y are perpendicular, and one of them is a length direction of the case 11, and the other is a width direction of the case 11, a height direction of the case 11 is a third direction Z, and the third direction Z is perpendicular to the first direction X and the second direction Y, that is, a direction in which the bottom wall 111 and the case cover 12 are spaced apart.

The heat exchange assembly 3 includes a heat exchanger 31, an adapter 32, and a connecting pipe 33. The heat exchanger 31 is disposed outside the case 11 and located between the bottom guard plate 14 and the bottom wall 111 of the case 11. The adapter 32 is disposed inside the case 11 and located in the first space 115. The connecting pipe 33 penetrates through the bottom wall 111 of the case 11, where an upper end of the connecting pipe 33 is inserted into the adapter 32, and a lower end of the connecting pipe 33 is inserted into the heat exchanger 31. The heat exchanger 31 defines a first flow passage 310, the adapter 32 defines a second flow passage 320, and the connecting pipe 33 connects the first flow passage 310 and the second flow passage 320.

Thus, by arranging the heat exchanger 31 outside the case 11, there is no need to consider the insulation issue between the heat exchanger 31 and the battery cells 11 inside the case 11. This simplifies the insulation design of the heat exchanger 31, and reduces processing difficulty and production cost. This also solves the problem of short circuits between the battery cells 21 and the heat exchanger 31, improving the reliability of the battery 100. Moreover, by arranging the heat exchanger 31 outside the case 11, the heat exchanger 31 does not occupy space inside the case 11, so that the capacity of the battery 100 is not reduced due to the installation of the heat exchanger 31, thereby effectively ensuring the capacity of the battery 100.

Furthermore, by arranging the adapter 32 inside the case 11 and providing the connecting pipe 33 that penetrates through the case 11 to connect the adapter 32 and the heat exchanger 31 outside the case 11, the heat exchanger 31 can introduce and discharge fluid through the adapter 32 inside the case 11. Thus, there is no need to provide an external liquid inlet/outlet path communicating with the heat exchanger 31 outside the case 11, thereby eliminating the need to increase sealing difficulty to meet an extension requirement of the external liquid inlet/outlet path. This can reduce the sealing difficulty of the battery 100, simplify the structure and cost of the battery 100, and improve the sealing reliability.

The adapter 32 may be an injection molded part or a metal part, and includes a flange portion 321 and a joint portion 322, where the flange portion 321 includes a flange plate 3211 and an insert 3212 provided on the flange plate 3211, the joint portion 322 is in a form of an elbow and includes an insertion section 3221 and a pipe connection section 3222, and is bent at a joint between the insertion section 3221 and the pipe connection section 3222. The heat exchanger 31 is a bent flat tube structure and has a connection hole 311, and the connecting pipe 33 is a circular tube.

During installation, one end of the connecting pipe 33 is inserted into the connection hole 311 to realize direct insertion between the heat exchanger 31 and the connecting pipe 33, and the heat exchanger 31 and the connecting pipe 33 can be connected by welding, then the connecting pipe 33 runs through a first hole 1111 in the bottom wall 111 of the case 11 from bottom to top, and the heat exchanger 31 and the bottom wall 111 are adhesively bonded using an adhesive layer 15 or directly welded to realize integration of the heat exchanger 31 and the bottom wall 111 while improving the temperature regulation performance. Then, the connecting pipe 33 is sleeved with the insertion section 3221 of the adapter 32, and the flange portion 321 is welded to the bottom wall 111, and/or locked by rivets, bolts, or the like that runs through a second hole 1112 in the bottom wall 111 and the insert 3212.

A fitting interface between the flange portion 321 and the bottom wall 111 is sealed with a first sealing member 34, and a fitting interface between the joint portion 322 and the connecting pipe 33 is sealed with two second sealing members 35 by interference fit. This can reduce the risk of sealing failure and liquid leakage, and improve the sealing performance when heat exchange liquid enters the battery 100 for circulation, thereby improving the reliability of the battery 100.

It should be noted that without conflict, the embodiments and features in the embodiments in this application may be combined with each other.

The foregoing descriptions are merely preferred embodiments of this application and are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery, comprising:
a case assembly comprising a case;
a cell assembly disposed in the case and comprising a plurality of battery cells; and
a heat exchange assembly comprising a heat exchanger, an adapter, and a connecting pipe, wherein the heat exchanger is disposed outside the case and defines a first flow passage, the adapter is disposed inside the case and defines a second flow passage, and the connecting pipe penetrates the case and connects the first flow passage and the second flow passage.

2. The battery according to claim 1, wherein the adapter comprises a flange portion and a joint portion, wherein the joint portion defines the second flow passage and is connected to the connecting pipe, the flange portion is connected to an outer periphery of the joint portion and abuts against an inner wall of the case, and the adapter is fixedly connected to the case through the flange portion.

3. The battery according to claim 2, wherein the flange portion comprises a flange plate and an insert provided on the flange plate, and the flange portion is connected to the case through a connecting member running through the insert.

4. The battery according to claim 2 or 3, wherein a first sealing member is sealingly fitted between the flange portion and the case, and the first sealing member is arranged around a fitting surface between the joint portion and the connecting pipe.

5. The battery according to claim 4, wherein the flange portion has a first annular groove, and the first sealing member is a first sealing ring and embedded in the first annular groove.

6. The battery according to any one of claims 2 to 5, wherein the connecting pipe is inserted into the joint portion.

7. The battery according to claim 6, wherein the joint portion comprises an insertion section and a pipe connection section, wherein the joint portion is in a form of an elbow and is bent at a joint between the insertion section and the pipe connection section, the connecting pipe is inserted into the insertion section, and the pipe connection section is sleeved with an adapter pipe.

8. The battery according to any one of claims 1 to 7, wherein the heat exchange assembly further comprises:
a second sealing member, wherein the second sealing member is sealingly fitted between the adapter and the connecting pipe.

9. The battery according to claim 8, wherein the connecting pipe is inserted into the adapter, and the second sealing member is arranged around the connecting pipe.

10. The battery according to claim 9, wherein the adapter has a second annular groove, and the second sealing member is a second sealing ring and embedded in the second annular groove.

11. The battery according to any one of claims 8 to 10, wherein a plurality of second sealing members are provided and spaced apart along an axial direction of the connecting pipe.

12. The battery according to any one of claims 1 to 11, wherein the connecting pipe is in insertion fit with the heat exchanger.

13. The battery according to claim 12, wherein a connection hole is provided on a side of the heat exchanger facing the case, an end portion of the connecting pipe located outside the case has an extension section, and the extension section is inserted into the connection hole.

14. The battery according to claim 13, wherein the end portion of the connecting pipe located outside the case further has a stepped section, and the stepped section abuts against a surface of the heat exchanger on the side facing the case.

15. The battery according to claim 14, wherein the connecting pipe comprises a pipe body, wherein taking a cross section of the connecting pipe as a projection plane, a projection of the stepped section extends beyond a projection contour range of the pipe body, and a projection of the extension section is located within the projection contour range of the pipe body.

16. The battery according to any one of claims 1 to 15, wherein the connecting pipe is welded to the heat exchanger, and the heat exchanger is adhesively bonded or welded to the case.

17. The battery according to any one of claims 1 to 16, wherein the case assembly further comprises:
a bottom guard plate, wherein the bottom guard plate is disposed below a bottom wall of the case, and the heat exchanger is disposed between the bottom wall and the bottom guard plate.

18. The battery according to claim 17, wherein the case assembly further comprises:
a sealing member, wherein the sealing member is sealingly fitted between the bottom wall and the bottom guard plate and comprises an outer peripheral portion arranged around the heat exchanger, and the connecting pipe corresponds to a region enclosed by the outer peripheral portion and penetrates through the bottom wall.

19. The battery according to claim 17 or 18, wherein an adhesive layer is provided between the heat exchanger and each of the bottom wall and the bottom guard plate.

20. The battery according to any one of claims 17 to 19, wherein the heat exchanger comprises at least one heat exchange tube extending in a bent manner, and the case assembly further comprises:
a foaming member, wherein the foaming member is disposed between the bottom wall and the bottom guard plate and comprises a first foaming portion arranged around the heat exchanger, and a second foaming portion disposed between adjacent tube sections of the same heat exchange tube or between adjacent heat exchange tubes.

21. The battery according to claim 20, wherein the foaming member is connected to the bottom guard plate, and an upper surface of the heat exchanger is higher than an upper surface of the foaming member.

22. The battery according to any one of claims 1 to 21, wherein the first flow passage has a first port and a second port, and the heat exchanger has a connection hole connected to the connecting pipe, wherein the connection hole is provided in two, one being arranged corresponding to the first port and the other being arranged corresponding to the second port, and the adapter and the connecting pipe are each provided in two, each connection hole being disposed corresponding to one connecting pipe and one adapter.

23. The battery according to claim 22, wherein the first flow passage comprises a plurality of heat exchange flow passages arranged in parallel, one end of the plurality of heat exchange flow passages converges to the first port, and the other end of the plurality of heat exchange flow passages converges to the second port.

24. The battery according to any one of claims 1 to 23, wherein the heat exchanger comprises at least one first heat exchange flow passage, and the first heat exchange flow passage comprises a first heat exchange section and a second heat exchange section, wherein the second heat exchange section is bent to form a first U-shaped region, the first heat exchange section is bent and disposed in the first U-shaped region and is connected in a bent manner to the second heat exchange section, and the second heat exchange section is located at an outermost side in a circumferential direction of the first heat exchange flow passage.

25. The battery according to claim 24, wherein the cell assembly comprises a plurality of battery units arranged along a first direction, each battery unit comprises a plurality of battery cells sequentially stacked along a second direction, and at least part of the second heat exchange section correspondingly exchanges heat with the plurality of battery cells located at an outermost periphery of the cell assembly in a circumferential direction.

26. The battery according to claim 24 or 25, wherein the heat exchanger further comprises at least one second heat exchange flow passage, and the second heat exchange flow passage and the first heat exchange flow passage are bent in a same plane, and the second heat exchange flow passage is bent and disposed in the first U-shaped region.

27. The battery according to claim 26, wherein at least one second heat exchange flow passage is bent to form a second U-shaped region, and at least part of the first heat exchange section is disposed in the second U-shaped region.

28. The battery according to any one of claims 1 to 27, wherein the heat exchanger comprises at least one heat exchange tube extending in a bent manner, wherein one heat exchange flow passage is defined in each heat exchange tube, and the heat exchange tube is a flat tube structure.

29. The battery according to any one of claims 1 to 28, wherein the heat exchanger comprises a main body portion and a connection portion, wherein the main body portion comprises a plurality of first tubes spaced apart along the first direction and extending along the second direction, the connection portion is connected to an end of the main body portion in the second direction, the heat exchanger has a connection hole connected to the connecting pipe, and the connection hole is provided on the connection portion.

30. The battery according to claim 29, wherein the connection portion comprises third tubes located on two sides of the connection hole in the first direction, and at least two of the third tubes on two sides of at least one of the connection hole extend in directions away from each other in a direction from the connection hole to the main body portion.

31. The battery according to any one of claims 1 to 30, wherein the case is an integrally stamped part and comprises a bottom wall and a surrounding wall, wherein an accommodation space is formed between the bottom wall and the surrounding wall, and the battery cells are installed in the accommodation space.

32. The battery according to any one of claims 1 to 31, wherein a thermal management system of the battery further comprises a temperature regulation member disposed inside the case, wherein the temperature regulation member is disposed on at least one of a bottom, a top, and a side of the battery cells.

33. An electric apparatus, comprising the battery according to any one of claims 1 to 32.
